(19) Europäisches Patentamt
European Patent Office
Office européen des brevets

(11) **EP 4 700 666 A1**

(12) **EUROPEAN PATENT APPLICATION**
published in accordance with Art. 153(4) EPC

(43) Date of publication:
**25.02.2026 Bulletin 2026/09**

(21) Application number: **24791981.4**

(22) Date of filing: **16.04.2024**

(51) International Patent Classification (IPC):
**G06N 20/20** $^{(2019.01)}$    **H04W 24/02** $^{(2009.01)}$

(52) Cooperative Patent Classification (CPC):
**G06N 20/00; G06N 20/20; H04L 41/16;**
**H04W 24/02; H04W 24/06**

(86) International application number:
**PCT/CN2024/087946**

(87) International publication number:
**WO 2024/217396 (24.10.2024 Gazette 2024/43)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **21.04.2023  CN 202310436139**

(71) Applicant: **Sony Group Corporation**
**Tokyo 108-0075 (JP)**

(72) Inventors:
- **SUN, Chen**
  **Beijing 100027 (CN)**
- **ZHENG, Ce**
  **Beijing 100027 (CN)**

(74) Representative: **D Young & Co LLP**
**3 Noble Street**
**London EC2V 7BQ (GB)**

(54) **ELECTRONIC DEVICE AND METHOD FOR WIRELESS COMMUNICATION SYSTEM, AND STORAGE MEDIUM**

(57)  The present invention relates to an electronic device and method for a wireless communication system, and a storage medium. A control device for a wireless communication system comprises a processing circuit, and is configured to: receive a plurality of models associated with a plurality of terminal devices in the wireless communication system, wherein the plurality of models comprises at least one aggregation model, each aggre-gation model among the at least one aggregation model is generated by one corresponding terminal device aggregating a local model of said corresponding terminal device and respective local models from one or more other terminal devices, and each local model is obtained by one corresponding terminal device performing training on the basis of local data of the terminal device.

**FIG. 3**

**EP 4 700 666 A1**

**Description**

**CROSS-REFERENCE TO RELATED APPLICATIONS**

This application is based on and claims the priority of Chinese patent application 202310436139.X, entitled "ELECTRONIC DEVICE AND METHOD FOR WIRELESS COMMUNICATION SYSTEM, AND STORAGE MEDIUM", filed on April 21, 2023, the entire content of which is incorporated herein by reference.

**TECHNICAL FIELD**

The present disclosure generally relates to wireless communication systems, and specifically to Federated learning in wireless communication systems.

**BACKGROUND**

With the development of wireless communication and Artificial Intelligence (AI)/Machine Learning (ML), consideration has already begun to introduce AI and ML into wireless communication systems. For example, the introduction of AI/ML technologies may bring significant improvements in aspects such as the performance, energy efficiency, security and privacy of wireless communication systems.

Conventional AI/ML solutions generally require collecting user data and training the collected user data in a centralized manner. However, such conventional AI/ML solutions may have drawbacks in terms of user privacy and the amount of communicated data. A new machine learning framework called Federated Learning (FL) has emerged to overcome these drawbacks. In a Federated learning system, a client device performs training using local data based on an initial model determined by an FL server, and uploads the trained local model to the FL server. The FL server aggregates local models received from respective client devices and transmits the aggregated model to respective client devices. Each client device performs training using the local data again based on the received aggregated model, and uploads the new local model obtained by performing training to the FL server for a new round of aggregation and training. By means of the Federated learning, users do not need to upload original local data to the server, so for one thing, user privacy may be improved, and for another thing, the amount of transmitted data may be reduced. Therefore, the Federated learning has become an AI/ML solution that is expected to be adopted in wireless communication systems.

**SUMMARY**

The present disclosure proposes a solution related to Federated learning in a wireless communication system. Specifically, the present disclosure provides a control device, a terminal device, a method and a storage medium for a wireless communication system.

One aspect of the present disclosure relates to a control device for a wireless communication system, comprising a processing circuitry configured to: receive a plurality of models associated with a plurality of terminal devices in the wireless communication system, wherein, the plurality of models comprise at least one aggregated model, wherein, each of the at least one aggregated model is generated by a corresponding terminal device aggregating its local model with respective one or more local models from one or more other terminal devices, and each local model is obtained by a corresponding terminal device performing training based on local data of the terminal device.

Another aspect of the present disclosure relates to a first terminal device for a wireless communication system, comprising a processing circuitry configured to: upload a first local model obtained by performing training based on local data to a control device of the wireless communication system; and transmit the first local model to a second terminal device of the wireless communication system via sidelink communication, for the second terminal device to generate an aggregated model.

Another aspect of the present disclosure relates to a second terminal device for a wireless communication system, comprising a processing circuitry configured to: receive at least one first local model from at least one first terminal device of the wireless communication system via sidelink communication, each of the at least one first local model being obtained by one of the at least one first terminal device performing training based on its local data; and aggregate a second local model obtained by performing training based on local data with the at least one first local model to generate an aggregated model, and upload the aggregated model to a control device of the wireless communication system.

Another aspect of the present disclosure relates to a third terminal device for a wireless communication system, the third terminal device and one or more other terminal devices constituting a terminal device group, the third terminal device comprising a processing circuitry configured to: receive at least one local model from at least one other terminal device in the terminal device group via sidelink communication, each of the at least one local model being obtained by one of the at least one other terminal device performing training based on its local data; aggregate a third local model obtained by performing training based on local data with at least one of the received at least one local model to generate an aggregated model, and upload the aggregated model to the control device; and transmit, to each of other terminal devices in the terminal device group via sidelink communication, the third local model, for each of the other terminal devices to generate an aggregated model.

Another aspect of the present disclosure relates to a method for a control device side of a wireless communication system, comprising: receiving a plurality of models associated with a plurality of terminal devices in the wireless communication system, wherein, the plurality of models comprise at least one aggregated model, wherein, each of the at least one aggregated model is generated by a corresponding terminal device aggregating its local model with respective one or more local models from one or more other terminal devices, and each local model is obtained by a corresponding terminal device performing training based on local data of the terminal device.

Another aspect of the present disclosure relates to a method for a first terminal device of a wireless communication system, comprising: uploading a first local model obtained by performing training based on local data to a control device of the wireless communication system; transmitting the first local model to a second terminal device of the wireless communication system via sidelink communication, for the second terminal device to generate an aggregated model.

Another aspect of the present disclosure relates to a method for a second terminal device of a wireless communication system, comprising: receiving at least one first local model from at least one first terminal device of the wireless communication system via sidelink communication, each of the at least one first local model being obtained by one of the at least one first terminal device performing training based on its local data; and aggregating a second local model obtained by performing training based on local data with the at least one first local model to generate an aggregated model, and uploading the aggregated model to a control device of the wireless communication system.

Another aspect of the present disclosure relates to a method for a third terminal device of a wireless communication system, the third terminal device and one or more other terminal devices constituting a terminal device group, the method comprising: receiving at least one local model from at least one other terminal device in the terminal device group via sidelink communication, each of the at least one local model being obtained by one of the at least one other terminal device performing training based on its local data; aggregating a third local model obtained by performing training based on local data with at least one of the received at least one local model to generate an aggregated model, and uploading the aggregated model to the control device; and transmitting, to each of other terminal devices in the terminal device group via sidelink communication, the third local model, for each of the other terminal devices to generate an aggregated model.

Another aspect of the present disclosure relates to a non-transitory computer-readable storage medium having executable instructions stored thereon, which, when executed, implement the methods as described in the above aspects.

Another aspect of the present disclosure relates to a computer program product comprising executable instructions, which, when executed, implement the method as described in the above aspects.

Another aspect of the present disclosure relates to a device. The device comprises: a processor and a storage having executable instructions stored thereon, which, when executed, implement the methods as previously described.

The above summary is provided to summarize some exemplary embodiments in order to provide a basic understanding to various aspects of the subject matter described herein. Therefore, above features are merely examples and should not be construed as limiting the scope or spirit of the subject matter described herein in any way. Other features, aspects, and advantages of the subject matter described herein will become apparent from the Detailed Description described below in conjunction with the drawings.

## BRIEF DESCRIPTION OF THE DRAWINGS

A better understanding of the present disclosure can be obtained when the following detailed description of embodiments is considered in conjunction with the accompanying drawings. The same or similar reference numbers are used throughout various drawings to denote the same or similar components. The accompanying drawings, along with the following detailed description, are incorporated in and constitute a part of this specification, to illustrate embodiments of the disclosure and to explain the principles and advantages of the disclosure. Wherein:

FIG. 1 schematically illustrates a traditional Federated learning network structure;
FIG. 2 schematically illustrates the problem of performance degradation of traditional Federated learning caused by unreliable communication;
FIG. 3 schematically illustrates a first embodiment according to the present disclosure;
FIG. 4A schematically illustrates an exemplary information interaction according to a first implementation of the first embodiment of the present disclosure;
FIG. 4B schematically illustrates an exemplary information interaction according to a first implementation of the first embodiment of the present disclosure;
FIG. 5A schematically illustrates an exemplary information interaction according to a second implementation of the first embodiment of the present disclosure;

FIG. 5B schematically illustrates an exemplary information interaction according to a second implementation of the first embodiment of the present disclosure;

FIG. 6 schematically illustrates a second embodiment according to the present disclosure;

FIG. 7A schematically illustrates an exemplary information interaction according to a first implementation of the second embodiment of the present disclosure;

FIG. 7B schematically illustrates an exemplary information interaction according to a first implementation of the second embodiment of the present disclosure;

FIG. 7C schematically illustrates an exemplary information interaction according to a first implementation of the second embodiment of the present disclosure;

FIG. 8A schematically illustrates an exemplary information interaction according to a second implementation of the second embodiment of the present disclosure;

FIG. 8B schematically illustrates an exemplary information interaction according to a second implementation of the second embodiment of the present disclosure;

FIG. 8C schematically illustrates an exemplary information interaction according to a second implementation of the second embodiment of the present disclosure;

FIG. 9 schematically illustrates an exemplary information interaction for selecting UEs to participate in Federated learning and dividing UE groups for Federated learning according to an embodiment of the present disclosure;

FIG. 10 schematically illustrates a conceptual configuration of an electronic device on a Federated learning control device side according to an embodiment of the present disclosure;

FIG. 11 schematically illustrates a conceptual operation flow on the Federated learning control device side according to an embodiment of the present disclosure;

FIG. 12 schematically illustrates a conceptual configuration of an electronic device on a terminal device side according to an embodiment of the present disclosure;

FIG. 13A schematically illustrates a conceptual operation flow on the terminal device side according to an embodiment of the present disclosure;

FIG. 13B schematically illustrates another conceptual operation flow on the terminal device side according to an embodiment of the present disclosure;

FIG. 13C schematically illustrates another conceptual operation flow on the terminal device side according to an embodiment of the present disclosure;

FIG. 14 schematically illustrates an overall architecture of a wireless communication system to which an embodiment of the present disclosure is applicable;

FIG. 15 is a block diagram of an example structure as an information processing device that may be employed in an embodiment of the present disclosure;

FIG. 16 is a block diagram showing a first example of a schematic configuration of a gNB to which the technology of the present disclosure may be applied;

FIG. 17 is a block diagram showing a second example of a schematic configuration of a gNB to which the technology of the present disclosure may be applied;

FIG. 18 is a block diagram showing an example of a schematic configuration of a smart phone to which the technology of the present disclosure may be applied; and

FIG. 19 is a block diagram showing an example of a schematic configuration of a car navigation device to which the technology of the present disclosure may be applied.

While the embodiments described in this disclosure may be susceptible to various modifications and alternatives, specific embodiments thereof are illustrated by way of example in the accompanying drawings and are described in detail herein. It should be understood, however, that the drawings and detailed description thereof are not intended to limit the embodiments to the particular forms disclosed; rather, it is intended to cover all modifications, equivalents and alternative falling within the spirit and scope of the claims.

## DETAILED DESCRIPTION

The following describes representative applications of various aspects of the device, method and the like according to the present disclosure. The description of these examples is merely to add context and help to understand the described embodiments. Therefore, it is clear to those skilled in the art that the embodiments described below may be implemented without some or all of the specific details. In other instances, well-known process steps have not been described in detail to avoid unnecessarily obscuring the described embodiments. Other applications are also possible, and the solution of the present disclosure is not limited to these examples.

Typically, a wireless communication system includes at least a terminal device and a control device.

In the present disclosure, the term "control device" has the full breadth of its ordinary meaning and may be a control device on the access network side of a wireless communication system, or may be a device on the core network side of a wireless communication system. For example, the control device in the present disclosure may be a wireless communication station that is a part of a wireless communication system or a radio system to facilitate communication. As an example, a base station may be, for example, an eNB of the 4G communication standard, a gNB of the 5G NR communication standard, a remote radio head, a wireless access point, a drone control tower, or a communication apparatus performing similar functions. For another example, the control device in the present disclosure may be one or more network element devices on the core network side of a wireless communication system. As an example, a single function may be implemented by a single network element device, a plurality of functions may be implemented by a single network element device, a single function may be implemented by a plurality of network element devices, or a plurality of functions may be jointly implemented by a plurality of network element devices. In the present disclosure, a network element device may also refer to one or more software and/or hardware modules. In particular, the control device in the present disclosure may be one or more network element devices on the core network side of a wireless system that implement one or more functions related to Federated learning.

In this disclosure, the term "terminal device" or "user equipment (UE)" has the full breadth of its ordinary meaning and includes at least a terminal device that is a part of a wireless communication system or radio system to facilitate communication. As an example, a terminal device may be, for example, a mobile phone, a laptop, a tablet, a vehicle-mounted communication device, a wearable device, a sensor, or the like, or a component thereof. In this disclosure, "terminal device" and "user equipment" (hereinafter may be simply referred to as "UE") may be used interchangeably, or "terminal device" may be implemented as a part of "user equipment".

In the present disclosure, the expression "a terminal device uploads/transmits (information/data) to a control device" may donate that the terminal device transmits the information/data directly to the control device (for example, when the control device is a base station), or may donate that the terminal device transmits the information/data to one or more intermediate devices, and the one or more intermediate devices forward the information/data to the control device (for example, when the control device is a network element device, and the one or more intermediate devices may include a base station and, where appropriate, one or more other network element devices in the core network).

In the present disclosure, the expression "a control device notifies/transmits (information/data) to a terminal device" may donate that the control device directly transmits the information/data to the terminal device (for example, when the control device is a base station), or may donate that the control device transmits the information/data to one or more intermediate devices, and the one or more intermediate devices forward the information/data to the terminal device (for example, when the control device is a network element device), and the one or more intermediate devices may include a base station and, where appropriate, one or more other network element devices in the core network.

As introduced in the Background section, the Federated learning has become an AI/ML solution that is expected to be adopted in wireless communication systems.

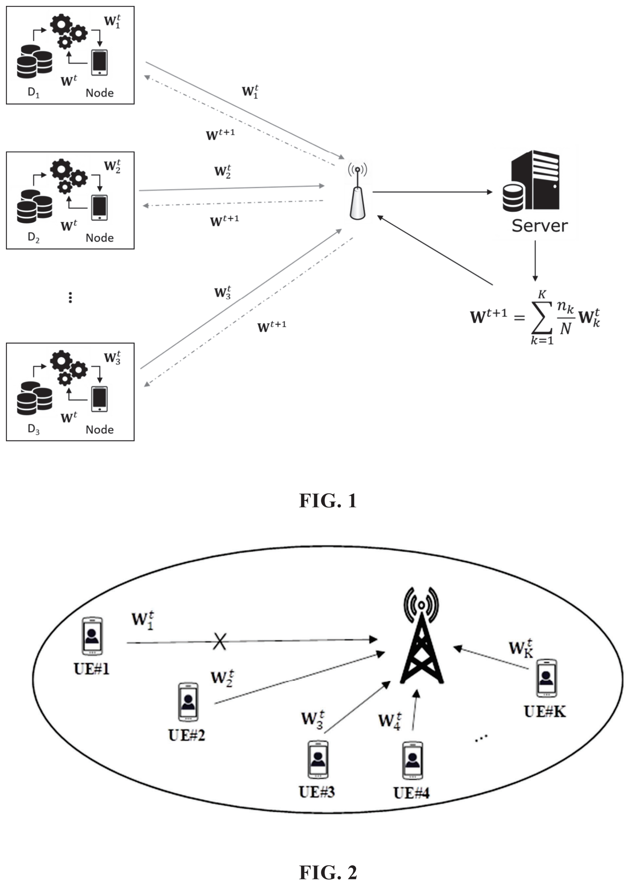

FIG. 1 illustrates a traditional Federated learning network structure.

With the traditional Federated learning network structure with K nodes as shown in FIG. 1, the specific process of Federated learning is as follows:

(1) A server determines an initial global model and transmits the initial global model to each node;

(2) Each node, based on the global model ($W^t$ as shown in FIG. 1) received from the server, uses local data $D_1$, $D_2$......$D_K$ of the node to learn (e.g., train the global model), thereby obtaining a local model $W_1^t$、$W_1^t$......$W_K^t$;

(3) Each node uploads the learned local model to the server;

(4) The server aggregates local models collected from each node according to formula (1) to obtain a new global model $W^{t+1}$.

$$W^{t+1} = \frac{1}{N} \sum_{k=1}^{K} n_k W_k^t \qquad \text{Formula (1)},$$

where, $N$ may represent the total amount of data of nodes 1 to $K$, which is expressed by formula (2), $n_k$ is the amount of data of node $K$,

$$N = \sum_{k=1}^{K} n_k \qquad \text{Formula (2)};$$

(5) The server transmits the aggregated model to each node, and each node repeats the above operations (2)-(4) until the model converges.

The federated learning network structure may be applied to wireless communication systems. For example, in this case, each UE may act as one node in the Federated learning network structure, while a network element device in the core network that implements functions related to Federated learning or a base station (hereinafter referred to as a control device) may act as a server in the Federated learning network structure. Each UE uploads the local model to the server of Federated learning using an uplink (in a case where the network element device acts as the server, the UE may transmit the local model to a base station, and the base station may forward the local model to the network element device). And the server of Federated learning utilizes a downlink to transmit the global model to each UE participating in the learning (in a case where the network element device acts as the server, the network element device may transmit the global model to a base station, and the base station may forward the local model to each UE).

However, due to the unreliability of communication in wireless communication systems, when the traditional Federated learning network structure is applied to wireless communication systems, there may be a situation where local models of some UEs fail to be successfully uploaded to the control device. For example, as shown in FIG. 2, the local model of UE#1 fails to be uploaded. In this case, the control device will only aggregate the received local models when updating the global model, for example, UE#2-UE#K in the case shown in FIG. 2. Therefore, for one thing, since the global model generated during the iteration process only considers local models of some UEs, the final converged model may be biased towards some UEs (for example, UEs with better communication quality); for another thing, the number of local models used during aggregation will be reduced. These two factors will eventually lead to a degradation in the Federated learning performance of the entire wireless communication system.

In view of this, the present disclosure proposes a solution for improving Federated learning of wireless communication systems. The present disclosure considers that in a Federated learning network, in addition to the traditional uplink and downlink, the sidelink between UEs is also utilized to transmit local models, thereby making up for the insufficient communication quality of some UEs in the uplink and downlink (especially the uplink). Specifically, according to the present disclosure, a control device may receive a plurality of models associated with a plurality of UEs in a wireless communication system. The plurality of models include at least one aggregated model. For example, each of the at least one aggregated model is generated by a corresponding UE aggregating its local model with respective one or more local models from one or more other UEs, and each local model is obtained by a corresponding UE performing training based on local data of the UE.

First Embodiment

According to a first embodiment of the present disclosure, at least two UEs in a wireless communication system may constitute a UE group for Federated learning. The UE group may include one central UE and at least one non-central UE, and the at least one non-central UE may communicate with the central UE via a sidelink. In other words, the UE group may be a centralized UE group. The central UE may receive local models (hereinafter referred to as first local models for the convenience of description) from other UEs in the UE group via sidelink communication, and each received local model is obtained by a corresponding non-central UE in the group performing training based on its local data. After receiving the first local model(s) of respective non-central UE(s) in the group, the central UE may aggregate a local model obtained by performing training based on its own local data (hereinafter referred to as a second local model for the convenience of description) with each of the received first local models to generate an aggregated model, and transmit the aggregated model to a control device of the wireless communication system (for example, a network element device or base station that implements functions related to Federated learning in the core network of the specification above). In addition, while each non-central UE transmits the first local model to the central UE via the sidelink, it may also upload the first local model to the control device of the wireless communication system, for example, via an uplink. This may further ensure the success rate of the contribution of each non-central UE's local model to the global model in the process of the Federated learning.

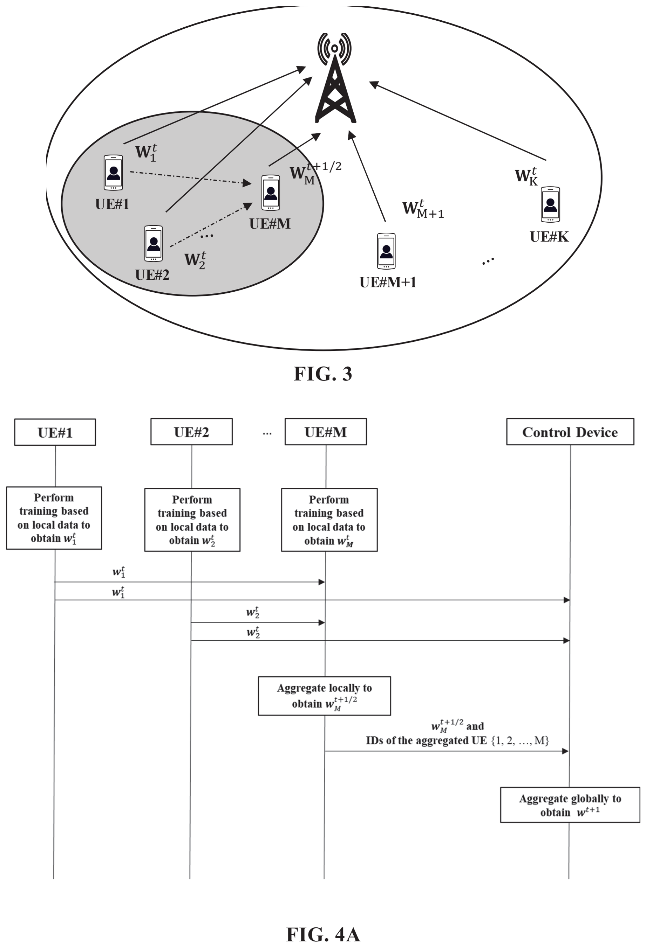

FIG. 3 illustrates a schematic diagram of the first embodiment. As shown in FIG. 3, it is assumed that a wireless communication system may include K UEs, wherein UE#1-UE#M may constitute a centralized UE group. For example, in the UE group, UE#M may act as a central UE, and other UEs may act as non-central UEs. UE#M may receive local models from other UEs in the UE group via sidelink communication (shown by dashed lines in FIG. 3). For example, as shown in FIG. 3, UE#1 may transmit a local model $W_1^t$ obtained by performing training based on local data of UE#1 to UE#M via a sidelink, and simultaneously upload the local model $W_1^t$ to a control device separately, and UE#2 may transmit a local model $W_2^t$ obtained by performing training based on local data of UE#2 to UE#M via a sidelink, and simultaneously upload the local model $W_2^t$ to the control device separately. After receiving the local models of respective non-central UEs in the group, UE#M may aggregate the local model obtained by performing training based on local data of UE#M with the local models received from other non-central UEs to generate an aggregated model $W_M^{t+1/2}$, and upload the aggregated model to the control device.

According to the present disclosure, one or more UEs with poor communication quality (for example, especially uplink communication quality) may constitute a centralized UE group with an adjacent UE with good communication quality (for example, especially uplink communication quality). For example, in particular, one or more UEs with poor uplink communication quality may constitute a centralized UE group with a UE with good sidelink communication quality therebetween and good uplink communication quality. In addition, on the basis of considering the communication quality, the computation capability of the UE may also be considered to determine whether the UE may be called the central UE of the centralized UE group. The control device may divide the centralized UE groups and determine the central UEs based on multiple pieces of information related to each UE. The division process and the information on which the division is based will be described in detail below. According to the present disclosure, one or more UEs with good communication quality (for example, especially uplink communication quality) may not participate in any UE group, but instead upload their local models independently as in traditional Federated learning.

The basic idea of the first embodiment of the present disclosure has been described in conjunction with FIG. 3. The aggregation process of the global model according to the first embodiment of the present disclosure will be described in detail below.

Assuming that the wireless communication system includes K UEs. Firstly, it is simply assumed that UE#1 and UE#2 in the K UEs constitute one centralized UE group (for example, assuming that UE#2 is the central UE), and other UEs upload their local models to the control device independently. In this case, the aggregated model to be uploaded by UE#2 may be expressed as formula (3):

$$W_2^{t+1/2} = \frac{1}{n_1 + n_2} \left( n_1 W_1^t + n_2 W_2^t \right) \qquad \text{Formula} \ (3)$$

wherein, $n_1$ and $n_2$ are data amounts of UE#1 and UE#2 respectively, and $W_1^t$ and $W_2^t$ are local models of UE#1 and UE#2 respectively.

When the control device performs aggregation based on the received models, the received local models and the aggregated model may be aggregated in a manner such that the local model of the same UE is not repeatedly aggregated, thereby avoiding the bias of the contribution of the local model of each UE to the global model. Therefore, the global model may be expressed as formula (4):

$$W^{t+1} = \frac{1}{N} \left[ \sum_{k=3}^{K} U_k n_k W_k^t + U_2 \left( n_1 + n_2 \right) W_2^{t+1/2} + \left( 1 - U_2 \right) U_1 n_1 W_1^t \right] \qquad \text{Formula} \ (4)$$

wherein, $N$ represents the total amount of data of UE#1-UE#K and may be expressed as formula (5), $n_k$ is the data amount of UE#k, $U_k = \{0,1\}$, $U_k = 1$ represents that the model of UE#k is uploaded successfully, and $U_k = 0$ represents that the model of UE#k failed to be uploaded. Similarly, $U_1 = \{0, 1\}$, $U_1 = 1$ represents that the model of UE#1 is uploaded successfully, and $U_1 = 0$ represents that the model of UE#1 failed to be uploaded, $U_2 = \{0,1\}$, $U_2 = 1$ represents that the model of UE#2 is uploaded successful, and $U_2 = 0$ represents that the model of UE#2 failed to be uploaded.

$$N = \sum_{k=3}^{K} U_k n_k + U_2 \left( n_1 + n_2 \right) + \left( 1 - U_2 \right) U_1 n_1 \qquad \text{Formula} \ (5)$$

As shown in formulas (4)-(5), when the aggregated model of UE#2 is uploaded successfully, the control device will no longer consider the local model uploaded by UE#1 separately, and the control device will only consider the local model uploaded by UE#1 separately when the aggregated model of UE#2 fails to be uploaded. Therefore, according to the first embodiment of the present disclosure, as long as the model of at least one of UE#1 and UE#2 is uploaded successfully, the model of UE#1 may contribute to the global model and the degree of contribution will not be biased.

Specifically, assuming that the failure probability of UE#1 transmitting its local model $W_1^t$ via an uplink is $q_1$, and the success probability is $p_1 = 1 - q_1$; and the failure probability of UE#2 transmitting the aggregated model $W_2^{t+1/2}$ via an

uplink is $q_2$, and the success probability is $p_2 = 1 - q_2$. For one iteration of Federated learning, in the case of adopting the traditional Federated learning solution (i.e., Federated learning without the aid of the sidelink), the probability that the local model $W_1^t$ of UE#1 eventually successfully contributes to the global model is: $1 - q_1$, while in the case of adopting the Federated learning solution of the first embodiment of the present disclosure, the probability that the local model $W_1^t$ of UE#1 eventually successfully contributes to the global model is: $1 - q_1 q_2$. Therefore, the probability that the local model $W_1^t$ of UE#1 eventually successfully contributes to the global model is increased by $q_1(1 - q_2)$. After multiple iterations of Federated learning, such increase may become more significant. In addition, since the aggregated model generated by aggregation has the same model size as the local model, the solution of the first embodiment does not cause a significant increase in the amount of data to be transmitted via the uplink in the wireless communication network.

More generally, assuming that a wireless communication system may include K UEs, M of the K UEs, i.e., UE#1-UE#M, constitute one centralized UE group (for example, assuming UE#M as the central UE), and other UEs upload their local models to the control device independently. In this case, the aggregated model to be uploaded by UE#M may be expressed as formula (6):

$$W_M^{t+1/2} = \frac{1}{\sum_{m=1}^{M} n_m} \sum_{m=1}^{M} n_m W_m^t \qquad \text{Formula} \ (6)$$

wherein, $n_m$ is the data amount of UE#m, and $W_m^t$ is the local model of UE#m.

In such a way that the local model of the same UE is not repeatedly aggregated, the global model may be expressed as formula (7) :

$$W^{t+1} = \frac{1}{N} \left[ \sum_{k=M+1}^{K} U_k n_k W_k^t + U_M W_M^{t+1/2} \sum_{m=1}^{M} n_m + \left(1 - U_M\right) \sum_{m=1}^{M-1} U_m n_m W_m^t \right] \quad \text{Formula} \ (7)$$

wherein, N may represent the total amount of data of UE#1-UE#K and is expressed by formula (8), $n_k$ is the data amount of UE#k, $U_k = \{0,1\}$, $U_k = 1$ represents that the model of UE#k is uploaded successfully, and $U_k = 0$ represents that the model of UE#k failed to be uploaded, similarly, $U_m/U_M = \{0,1\}$, $U_m/U_M = 1$ represents that the model of UE#m/UE#M is uploaded successfully, and $U_m/U_M = 0$ represents that the model of UE#m/UE#M failed to be uploaded,

$$N = \sum_{k=M+1}^{K} U_k n_k + U_M \sum_{m=1}^{M} n_m + \left(1 - U_M\right) \sum_{m=1}^{M-1} U_m n_m \qquad \text{Formula} \ (8)$$

As shown in formulas (7)-(8), when the aggregated model of UE#M is uploaded successfully, the control device will no longer consider the local models uploaded by UE#1 to UE#M-1 separately, and the control device will only consider the local models uploaded separately by UE#1 to UE#M-1 when the aggregated model of UE#M fails to be uploaded. Therefore, according to the first embodiment of the present disclosure, as long as the model of at least one of UE#m (m=1, ..., M-1) and UE#M is uploaded successfully, the model of UE#m may contribute to the global model without causing bias.

Specifically, assuming that the failure probability of UE#m transmitting its local model $W_m^t$ via an uplink is $q_m$, and the success probability is $p_m = 1 - q_m$; and the failure probability of UE#M transmitting the aggregated model $W_M^{t+1/2}$ via an uplink is $q_M$, and the success probability is $p_M = 1 - q_M$. For one iteration of Federated learning, in the case of adopting the traditional Federated learning solution (i.e., Federated learning without the aid of the sidelink), the probability that the local model $W_m^t$ of UE#m eventually successfully contributes to the global model is: $1 - q_m$, while in the case of adopting the Federated learning solution of the present disclosure, the probability that the local model $W_m^t$ of UE#m eventually successfully contributes to the global model is: $1 - q_m q_M$. Therefore, the probability that the model $W_m^t$ of UE#m eventually successfully contributes to the global model is increased by $q_m(1 - q_M)$.

According to the present disclosure, since the control device needs to perform aggregation of the received models (which, for example, may include the aggregated model(s) and local models in the first embodiment) in a manner such that the local model of the same UE is not repeatedly aggregated, it is necessary to enable the control device to know the non-central UEs to which the local models aggregated by the aggregated model transmitted by the central UE correspond. In other words, it is necessary to enable the control device to know: which local models need to be aggregated with the received aggregated model to generate a global model. According to the present disclosure, a first implementation in which the UE determines which local models to aggregate and reports, to the control device, information indicating which local models have been aggregated together with the aggregated model, and a second implementation in which the control device determines which local models the UE need to aggregate and transmits an aggregation instruction to the UE, may be provided.

FIGS. 4A-4B schematically illustrate an exemplary information interaction according to a first implementation of the first embodiment of the present disclosure.

As shown in FIGS. 4A-4B, in the first implementation of the first embodiment, a central UE (e.g., UE#M in FIGS. 4A-4B) may upload, together with the aggregated model, information identifying respective UEs corresponding to the aggregated local model. For example, the information identifying respective UEs corresponding to the aggregated local model may be identifiers of UEs. For example, the central UE may transmit the identifiers of the UEs while transmitting the aggregated model, such as encoding both the aggregated model and the UE identifiers in the same message. Alternatively, the central UE may also transmit the aggregated model and the UE identifiers separately using separate messages. It should be noted that the central UE may have not received any local model, in which case the central UE may also upload its local model together with its own identifier to the control device.

The central UE may aggregate all received local models to generate an aggregated model, and upload an identifiers of the respective UEs corresponding to the aggregated local model to the control device. For example, as shown in FIG. 4A, when all local models in the UE group are successfully transmit to UE#M, UE#M may aggregate local models of all UEs in the UE group (including UE#M's own local model), and upload the aggregated model $W_M^{t+1/2}$ and IDs of the aggregated UEs, i.e., {1, 2, ..., M}, to the control device, so that the control device knows that the aggregated model has aggregated local models of UE#1 to UE#M. In response to the received information, the control device may discard local models uploaded by UE#1 to UE#M-1 separately, and aggregate the received aggregated model with a local model(s) of another UE or other UEs in the wireless communication system that are not divided into the UE group, so as to aggregate local models of respective UEs participating in the Federated learning in a non-repetitive manner to generate a global model $W^{t+1}$.

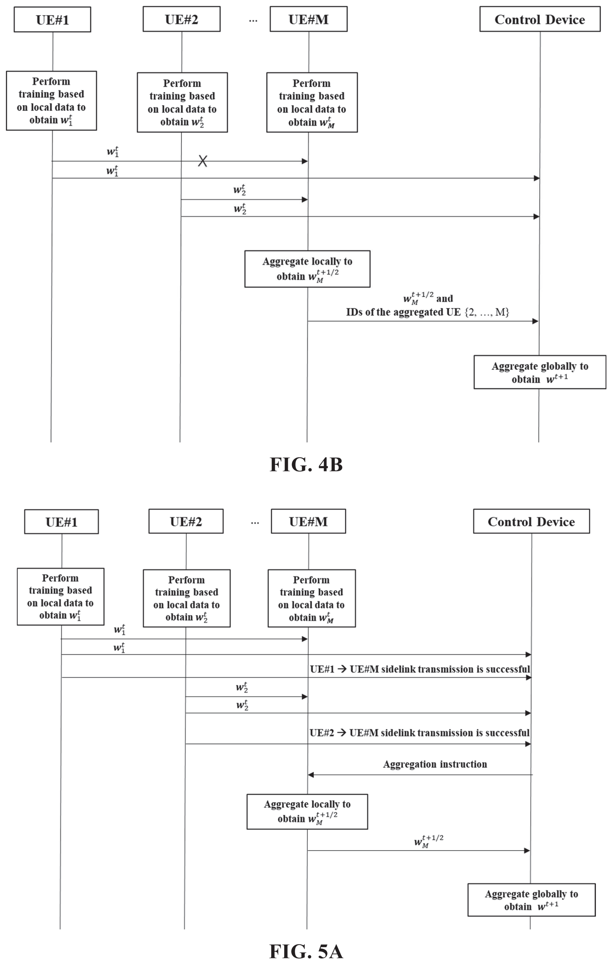

In a case where not all local models in the UE group are successfully transmitted to UE#M, for example, as shown in FIG. 4B, in a case where UE#1 fails to transmit the local model to UE#M, UE#M may aggregate all successfully received local models of UEs and UE#M's own local model, and upload the aggregated model $W_M^{t+1/2}$ and IDs of the aggregated UEs, i.e., {2, ..., M}, to the control device, so that the control device knows that the aggregated model has aggregated local models of UE#2 to UE#M and the model of UE#1 is not aggregated. In response to the received information, the control device may discard local models uploaded by UE#2 to UE#M-1 separately, and aggregate the received local model of UE#1, the aggregated model uploaded by UE#M, and local models of other UEs in the wireless communication system that are not divided into the UE group, thereby generating a global model $W^{t+1}$.

Specifically, in the case where UE#1 fails to transmit the local model to UE#M, the aggregated model to be uploaded by UE#M may be evolved from the above formula (6) to formula (6-1):

$$W_M^{t+1/2} = \frac{1}{\sum_{m=2}^{M} n_m} \sum_{m=2}^{M} n_m W_m^t \qquad \text{Formula } (6-1)$$

The global model to be generated by the control device may be evolved from the above equation (7) to equation (7-1):

$$W^{t+1} = \frac{1}{N} \left[ \sum_{k=M+1}^{K} U_k n_k W_k^t + U_1 n_1 W_1^t + U_M W_M^{t+1/2} \sum_{m=2}^{M} n_m + (1 - U_M) \sum_{m=2}^{M-1} U_m n_m W_m^t \right] \text{Formula } (7-1)$$

The total amount of data N of UE#1-UE#M may be evolved from the above formula (8) into formula (8-1):

$$N = \sum_{k=M+1}^{K} U_k n_k + U_1 n_1 + U_M \sum_{m=2}^{M} n_m + (1 - U_M) \sum_{m=2}^{M-1} U_m n_m \qquad \text{Formula } (8-1)$$

FIGS. 5A-5B schematically illustrate exemplary information interactions according to a second implementation of the first embodiment of the present disclosure.

As shown in FIGS. 5A-5B, in the second implementation of the first embodiment, each non-central UE in the UE group may transmit to the control device information indicating the success or failure of transmitting the local model to the central UE. Each non-central UE may transmit information in any appropriate manner so that the control device knows whether transmission of a local model of the non-central UE to the central UE (also called sidelink transmission of the local model) is successful. F only or example, the non-central UE may feedback to the control device when it fails to transmit a local model to the central UE, and in a case where the control device does not receive a feedback message from the non-central UE about a sidelink transmission failure of a local model, it is assumed by default that the transmission of the local model from the non-central UE to the central UE is successful. For another example, regardless of success or failure, the non-central UE may feedback to the control device a message indicating whether the sidelink transmission of a local model is successful each time the local model is transmitted to the central UE. Preferably, any approach that ensures communication reliability (such as a retransmission mechanism, a repeated transmission mechanism, etc.) may be used to ensure that the control device receives information indicating whether the sidelink transmission of a local model is successful. Preferably, the non-central UE may, as shown in FIGS. 5A-5B, utilize a message separate from the message for uploading a local model to the control device to separately feedback to the control device whether the sidelink transmission of the local model is successful. Optionally, the non-central UE may also transmit information indicating whether the sidelink transmission of the local model is successful together with the local model (for example, in a case where the non-central UE detects that the uplink communication quality is good).

At least in response to the messages received from respective non-central UEs indicating whether the sidelink transmission of local models is successful, the control device may determine which local models the central UE needs to aggregate, and transmit an aggregation instruction to the central UE, thereby indicating whether the central UE shall aggregate the local model of the central UE with the local models of one or more other non-central UEs, and when the aggregation is necessary, which one or more other non-central local models the local model of the central UE shall be aggregated with. For example, the control device may, simply in response to the messages received from respective non-central UEs indicating whether the sidelink transmission of the local models are successful, indicate the central UE to aggregate all successfully received local model(s) with its own model. For another example, the control device may also, based on a local model(s) successfully received from a respective non-central UE(s) in combination with messages received from respective non-central UEs indicating whether sidelink transmission of the local models is successful, indicate the central UE to only aggregate the local model(s) that the control device has not received but has been successfully transmitted via the sidelink(s).

For example, as shown in FIG. 5A, in a case where all local models in the UE group are successfully transmitted to UE#M, the control device may transmit an aggregation instruction to UE#M, indicating UE#M to aggregate the local models of UE#1-UE#M. In response to the aggregation instruction, UE#M may generate and upload to the control device an aggregated model $W_M^{t+1/2}$ that has aggregated the local models of UE#1-UE#M. The control device may discard the local models uploaded separately by UE#1 to UE#M-1, and aggregate the received aggregated model with local models of other UEs in the wireless communication system that are not divided into the UE group, so as to aggregate local models of respective UEs participating in the Federated learning in a non-repetitive manner to generate a global model $W^{t+1}$.

For another example, in a case where all local models in the UE group are successfully transmitted to UE#M and the control device successfully receives the local models of UE#1-UE#M-1, the control device may transmit an aggregation instruction to UE#M, indicating UE#M not to aggregate the local models but to upload its own local model separately. Subsequently, the control device may aggregate the received local models corresponding to respective UEs to generate a global model $W^{t+1}$.

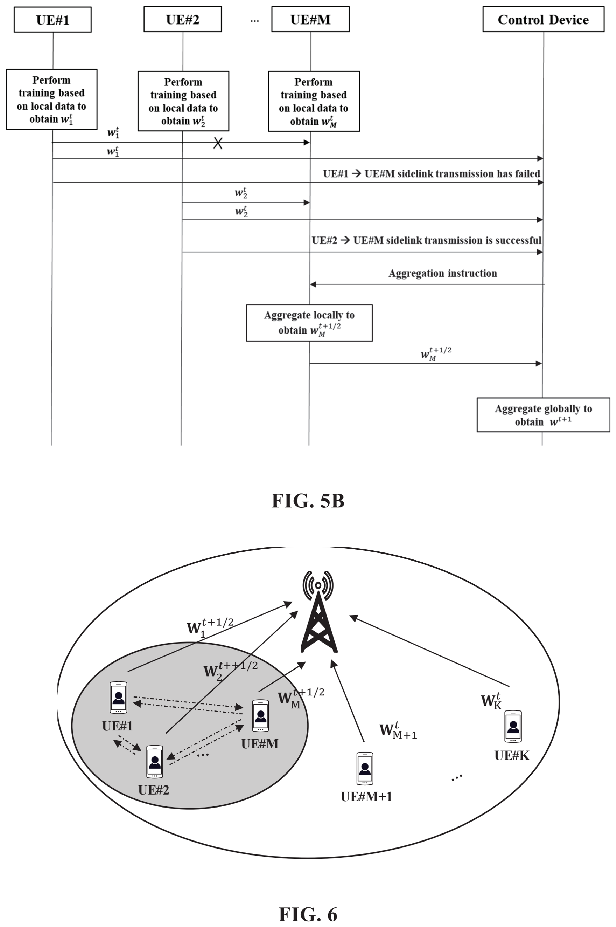

In a case where not all local models in the UE group are successfully transmitted to UE#M, for example, as shown in FIG. 5B, in a case where UE#1 fails to transmit the local model to UE#M, the control device may transmit an aggregation instruction to UE#M, indicating UE#M to aggregate the local models of UE#2-UE#M. In response to the aggregation instruction, UE#M may generate and upload to the control device an aggregated model $W_M^{t+1/2}$ that has aggregated the local models of UE#2-UE#M. The control device may discard the local models uploaded separately by UE#2 to UE#M-1, and aggregate the received local model of UE#1, the aggregated model uploaded by UE#M, and local models of other UEs in the wireless communication system that are not divided into the UE group, thereby generating a global model $W^{t+1}$.

For another example, in a case where UE#1 fails to transmit the local model to UE#M and the control device has successfully received the local models of, for example, UE#1 and UE#2, the control device may transmit an aggregation instruction to UE#M, indicating UE#M to aggregate the local models of UE#3-UE#M. In response to the aggregation instruction, UE#M may generate and upload to the control device an aggregated model $W_M^{t+1/2}$ that has aggregated the local models of UE#3-UE#M. Subsequently, the control device may aggregate the received local model of UE#1, the local model of UE#2, the aggregated model uploaded by UE#M, and local models of other UEs in the wireless communication system that are not divided into the UE group, thereby generating a global model $W^{t+1}$.

The first embodiment according to the present disclosure has been described in detail with reference to the accompanying drawings. For ease of description, the above description is based on the existence of one centralized UE group in the wireless communication system. It should be understood that any number of centralized UE groups may exist as appropriate.

Second Embodiment

According to the second embodiment of the present disclosure, at least two UEs in a wireless communication system may constitute a UE group for Federated learning. The UE group may include at least two UEs that communicate with each other via a sidelink. In other words, any two UEs in the UE group may transmit and receive information via a sidelink (i.e., the sidelink communication between any two UEs may be bidirectional). The UE group according to the second embodiment of the present disclosure is a decentralized UE group. In the UE group, each UE may receive at least one local model from at least one other UE in the UE group via sidelink communication, and each of the at least one local model is obtained by one of the at least one other UEs performing training based on its local data. After receiving at least one local model of at least one other UE in the group, each UE in the UE group may aggregate a local model obtained by performing training based on the UE's own local data with at least one of the received at least one local model to generate an aggregated model, and upload the aggregated model to a control device of the wireless communication system (e.g., a network element device or base station in the core network described above that implements functions related to Federated learning). At the same time, each UE in the UE group may also transmit (e.g., broadcast) its own local model to another/other UE(s) in the UE group via sidelink communication for the another/other UE(s) to generate aggregated model (s) .

FIG. 6 illustrates a schematic diagram of a second embodiment. As shown in FIG. 6, assuming that a wireless communication system includes K UEs, wherein, UE#1-UE#M may constitute one decentralized UE group. For example, in the UE group, each UE may transmit (e.g., broadcast) its own local model to other UEs in the UE group via sidelink communication (shown by dashed lines in FIG. 6) and receive local models from respective other UEs in the UE group. For example, as shown in FIG. 6, UE#1 may aggregate a local model obtained by performing training based on local data of UE#1 and local models received from other UEs in the UE group to obtain an aggregated model $W_1^{t+1/2}$, and upload the aggregated model to the control device. UE#2 to UE#M may also obtain their respective aggregated models $W_2^{t+1/2}$ to $W_M^{t+1/2}$ in a similar manner and upload the aggregated models to the control device.

In particular, there may be a situation where sidelink transmission for a local model fails. In other words, respective UEs in the same UE group may not receive local models from all other UEs. Herein, the following situation is referred to as existing a sidelink transmission failure of a local model related to a certain UE: within the UE group, a local model transmission via a sidelink to a certain UE fails and/or a local model reception via a sidelink of a certain UE fails. For example, assuming that UE#1 fails to transmit a local model to UE#2, then regardless of whether UE#2 successfully transmits a local model to UE#1, it is considered that there exists a sidelink transmission failure of a local model related to UE#1 and UE#2.

In a case where there exists a sidelink transmission failure of a local model related to one or more UEs, the one or more UEs may be removed from the original UE group, and the other UEs in the original UE group only aggregate local models of the remaining UEs. In other words, for each UE that a sidelink transmission failure of a local model related to it does not exist, the UE aggregates a local model obtained by performing training based on its local data with the following one or more received local models: the one or more local models corresponding to one or more other UEs that no sidelink transmission failure of a local model related thereto exists.

The removed UEs may upload their local models to the control device separately. Alternatively, the removed plurality of UEs may be reorganized into one or more centralized and/or decentralized UE groups (i.e., UE groups according to the first embodiment and/or UE groups according to the second embodiment). For example, in the case of reorganizing into a decentralized UE group, each UE may aggregate its local model with local models of one or more other UEs that are removed, to generate a new aggregated model and upload the new aggregated model to the control device. In other words, in the case of reorganizing into a decentralized UE group, each UE may aggregate its local model with the following one or more local models received, to generate a new aggregated model and upload the new aggregated model to the control device: the one or more local models corresponding to one or more other UEs that exist a sidelink transmission failure of a local model related to thereto. For example, in the case of reorganizing into a centralized group, a new central UE may generate a new aggregated model and upload the new aggregated model to the control device, similar to the UEs in the decentralized UE group. For another example, in the case of reorganizing into a centralized UE group, a non-central UE(s) in the new UE group may transmit its local model(s) to a new central UE for it to generate and upload a new aggregated model to the control device.

It is understandable that the purpose of removing UEs from a UE group is, for example, to simplify the operation of a control device when generating a global model. Since the control device needs to aggregate the received one or more local models and/or one or more aggregated models in a manner that does not repeatedly aggregate the local model of the same UE, if an aggregated model uploaded by each UE in a UE group aggregates a plurality of different local models corresponding to a plurality of different UEs, the control device needs more complex statistical and calculation operations to generate an appropriate global model. However, in the event that a sidelink transmission of a local model fails, the present disclosure is not limited to the implementation of removing the UE from the UE group. For example, one alternative is that respective UEs aggregate all received local models respectively, and for each UE whose local model fails to be transmitted to any UE, the UE may separately upload its own local model to the control device.

According to the present disclosure, a plurality of UEs with poor communication quality (for example, especially uplink communication quality) may constitute a decentralized UE group. For example, in particular, a plurality of UEs with poor uplink communication quality may constitute a decentralized UE group. Alternatively, one or more UEs with poor communication quality (for example, especially uplink communication quality) may also constitute a decentralized UE group with one or more adjacent UEs with good communication quality (for example, especially uplink communication quality). The decentralized UE group may be divided by a control device based on a plurality of information related to respective UEs. This division process and the information on which the division is based will be described in detail below. Similar to the first embodiment, one or more UEs with good communication quality (for example, especially uplink communication quality) may not participate in any UE group, but instead, upload their local models independently as in traditional Federated learning.

The basic idea of the second embodiment of the present disclosure has been described in conjunction with FIG. 6. The aggregation process of the global model according to the second embodiment of the present disclosure will be described in detail below.

Assuming that the wireless communication system includes K UEs, first simply assume that UE#1 and UE#2 in the K UEs constitute a decentralized UE group. After UE#1 obtains a local model $W_1^t$ by performing training based on its local data, it transmits the local model $W_1^t$ to UE#2, and after UE#2 obtains a local model $W_2^t$ by performing training based on its local data, it transmits the local model $W_2^t$ to UE#1. Subsequently, UE#1 and UE#2 perform model aggregation respectively. Since the local models to be aggregated by UE#1 and UE#2 are the same two groups of models (that is, each group of models includes the local model $W_1^t$ of UE#1 and the local model $W_2^t$ of UE#2, the aggregated model $W_1^{t+1/2}$ to be uploaded by UE#1 and the aggregated model $W_2^{t+1/2}$ to be uploaded by UE#2 may be expressed as formula (9):

$$W^{t+1/2} = W_1^{t+1/2} = W_2^{t+1/2} = \frac{1}{n_1 + n_2}\left(n_1 W_1^t + n_2 W_2^t\right) \qquad \text{Formula}\left(9\right)$$

wherein, $n_1$ and $n_2$ are data amounts of UE#1 and UE#2 respectively.

When the control device performs aggregation based on the received models, the received local model(s) and the aggregated model(s) may be aggregated in a manner such that the local model of the same UE is not repeatedly aggregated, thereby avoiding different contributions of local models of respective UEs to the global model. Therefore, the global model may be expressed as formula (10):

$$W^{t+1} = \frac{1}{N}\left[\sum_{k=3}^{K} U_k n_k W_k^t + \left[1 - \left(1 - U_1\right)\left(1 - U_2\right)\right]\left(n_1 + n_2\right)W^{t+1/2}\right] \qquad \text{Formula}\left(10\right)$$

wherein, N may represent the total amount of data of UE#1-UE#K, which is expressed by formula (11), $n_k$ is the amount of data of UE#k, $U_k = \{0, 1\}$, $U_k = 1$ represents that the model of UE#k is uploaded successfully, and $U_k = 0$ represents that the model of UE#k failed to be uploaded. Similarly, $U_1 = \{0, 1\}$, $U_1 = 1$ represents that the model of UE#1 is uploaded successfully, and $U_1 = 0$ represents that the model of UE#1 failed to be uploaded, $U_2 = \{0,1\}$, $U_2 = 1$ represents that the model of UE#2 is uploaded successfully, and $U_2 = 0$ represents that the model of UE#2 failed to be uploaded.

$$N = \sum_{k=3}^{K} U_k n_k + \left[1 - \left(1 - U_1\right)\left(1 - U_2\right)\right](n_1 + n_2) \qquad \text{Formula}\,(11)$$

As shown in formulas (10)-(11), when generating a global model, the control device will not repeatedly aggregate aggregated models uploaded by UE#1 and UE#2, that is, when both UE#1 and UE#2 successfully upload aggregated models, the control device will discard one of the aggregated models and only use one aggregated model representing respective local models of UE#1 and UE#2 to generate a global model. In addition, as shown in formulas (10)-(11), as long as at least one of the models of UE#1 and UE#2 is uploaded successfully, the models of UE#1 and UE#2 may contribute to the global model.

Specifically, assuming that the failure probability of UE#1 transmitting a model via an uplink is $q_1$, and the success probability is $p_1 = 1 - q_1$; and the failure probability of UE#2 transmitting a model via an uplink is $q_2$, and the success probability is $p_2 = 1 - q_2$. For one iteration of Federated learning, in the case of adopting the traditional Federated learning solution (i.e., Federated learning without the aid of the sidelink), the probability that the local model $W_1^t$ of UE#1 eventually successfully contributes to the global model is: $1 - q_1$, while in the case of adopting the Federated learning solution of the second embodiment of the present disclosure, the probability that the local model $W_1^t$ of UE#1 eventually successfully contributes to the global model is : $1 - q_1 q_2$. Therefore, the probability that the local model $W_1^t$ of UE#1 eventually successfully contributes to the global model is increased by $q_1(1 - q_2)$. Similarly, the probability that the model $W_2^t$ of UE#2 eventually successfully contributes to the global model is increased by $q_2(1 - q_1)$. After multiple iterations of Federated learning, such increase may become more significant. In addition, since the aggregated model generated by aggregation has the same model size as the local model, the solution of the second embodiment does not cause a significant increase in the amount of data to be transmitted via the uplink in the wireless communication network.

More generally, assuming that a wireless communication system includes K UEs, and M of the K UEs, i.e., UE#1-UE#M, constitute one decentralized UE group, wherein, each UE transmits its local model to the other UEs and aggregates its local model with local models from the other UEs. Since the local models to be aggregated by UE#1 to UE#M are the same M groups of models (i.e., each group of models includes the local model $W_1^t$ of UE#1 to the local model $W_M^t$ of UE#M, the aggregated model to be uploaded by respective UEs may be expressed as formula (12):

$$W_1^{t+1/2} = \cdots = W_M^{t+1/2} = W^{t+1/2} = \frac{1}{\sum_{m=1}^{M} n_m} \sum_{m=1}^{M} n_m W_m^t \qquad \text{Formula}\,(12)$$

wherein, $n_m$ is the data amount of UE#m, and $W_m^t$ is the local model of UE#m.

In such a way that the local model of the same UE is not repeatedly aggregated, the global model may be expressed as formula (13) :

$$W^{t+1} = \frac{1}{N}\left[\sum_{k=M+1}^{K} U_k n_k W_k^t + \left[1 - \prod_{m=1}^{M}\left(1 - U_m\right)\right]\sum_{m=1}^{M} n_m\, W^{t+1/2}\right] \qquad \text{Formula}\,(13)$$

wherein, N may represent the total data amount of UE#1-UE#K and is expressed by formula (14), $n_k$ is the data amount of UE#k, $U_k = \{0,1\}$, $U_k = 1$ represents that the model of UE#k is uploaded successfully, and $U_k = 0$ represents that the model of UE#k failed to be uploaded, similarly, $U_m = \{0,1\}$, $U_m = 1$ represents that the model of UE#m is uploaded successfully, and $U_m = 0$ represents that the model of UE#m failed to be uploaded,

$$N = \sum_{k=M+1}^{K} U_k n_k + \left[ 1 - \prod_{m=1}^{M} (1 - U_m) \right] \sum_{m=1}^{M} n_m \qquad \text{Formula } (14)$$

As shown in formulas (13)-(14), when generating a global model, the control device will not repeatedly aggregate aggregated models uploaded by UE#1 to UE#M, that is, when UE#1 to UE#M all have uploaded successfully aggregated models, the control device will only use one aggregated model that aggregates the local models of UE#1 to UE#M to generate a global model. In addition, as shown in formulas (13)-(14), as long as the model of at least one of UE#1 to UE#M is uploaded successfully, the models of UE#1 to UE#M may contribute to the global model.

Specifically, assuming that the failure probability of UE#m transmitting a model via an uplink is $q_m$, and the success probability is $p_m = 1 - q_m$. For one iteration of Federated learning, in the case of adopting the traditional Federated learning solution (i.e., Federated learning without the aid of the sidelink), the probability that the local model $W_m^t$ of UE#m eventually successfully contributes to the global model is: $1 - q_m$, while in the case of adopting the Federated learning solution of the second embodiment of the present disclosure, the probability that the local model $W_m^t$ of UE#m eventually successfully contributes to the global model is: $1 - \prod_{i=1}^{M} q_i$. Therefore, the probability that the local model $W_m^t$ of UE#m eventually successfully contributes to the global model is increased $q_m(1 - \prod_{i=1, i \neq m}^{M} q_i)$.

Similar to the first embodiment, it is necessary to enable the control device to know the UEs to which the local models aggregated by the aggregated model transmitted by each UE correspond. In other words, it is necessary to enable the control device to know: which local models need to be aggregated with the received aggregated model to generate a global model. Similar to the first embodiment, a first implementation in which the UE determines which local models are to be aggregated and reports, to the control device, information indicating which local models are aggregated together with the aggregated model, and a second implementation in which the control device determines which local models the UE needs to aggregate and transmits an aggregation instruction to the UE, may be provided.

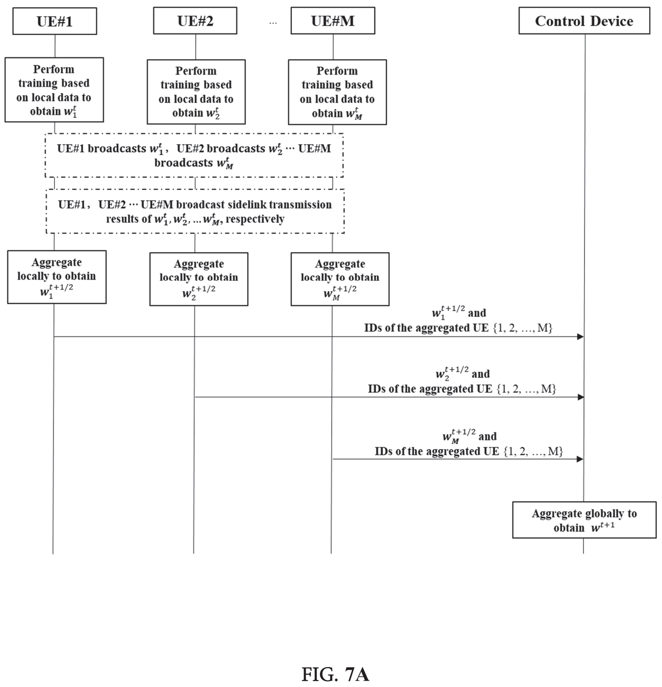

FIGS. 7A-7C schematically illustrate an exemplary information interaction according to a first implementation of the second embodiment of the present disclosure.

As shown in FIGS. 7A-7C, in the first implementation of the second embodiment, each UE in the UE group is first trained based on its own local data and obtains its own local model ( $W_1^t$, $W_2^t$, ... $W_M^t$ ). Subsequently, each UE transmits its own local model to other UEs in the UE group. For example, as shown in FIGS. 7A-7C, each UE may broadcast its own local model in the UE group. In the first implementation of the second embodiment, each UE in the UE group may determine which local models to aggregate according to sidelink transmission results (i.e., success or failure) of local models of respective UEs in the group. Therefore, as shown in FIGS. 7A-7C, after transmitting the local model in the UE group, each UE may transmit the transmission result of the local model to other UEs in the UE group, that is, information indicating whether the transmission of its local model to each of the other UEs in the UE group is successful or failed. For example, as shown in FIGS. 7A-7C, each UE may broadcast the sidelink transmission result of its local model in the UE group. In other words, each UE broadcasts information indicating whether transmission of its local model to each of the other UEs in the UE group are successful or failed to the UE group via sidelink communication. At the same time, each UE may also receive information from at least one other UE in the UE group via sidelink communication, indicating the success or failure of the transmission of the local model from the at least one other UE to each UE in the UE group.

Each UE may transmit information in any appropriate manner so that other UEs know whether the sidelink transmission of the local model of the UE is successful. For example, each UE may only broadcast the failure of transmission of the local model to one or more other UEs (in this case, it may be assumed that the UE successfully transmits the local model to the remaining UEs). For another example, each UE may broadcast sidelink transmission results of its own local model to each of other UEs. Preferably, any approach that ensures communication reliability (such as a retransmission mechanism, a repeated transmission mechanism, etc.) may be used to transmit information indicating whether the sidelink transmission of the local model is successful.

In the first implementation of the second embodiment, after receiving local model transmission result information from other UEs, each UE in the UE group may independently determine whether to aggregate the received local models.

For example, as described above, for each UE that does not have a sidelink transmission failure for a local model related to it (i.e., the local model is successfully transmitted to the other UEs in the UE group, and local models of each of the other UEs in the UE group are successfully received), the UE may determine one or more UEs to be removed from the UE group, that is, determine which one or more UEs in the original UE group have failed in the sidelink transmission of the local model. For example, this determination may be based on the sidelink transmission results broadcast by other UEs. After determining which local models to aggregate, the UE may generate an aggregated model accordingly, and together with the aggregated model, also upload information identifying respective UEs corresponding to respective aggregated local models. For example, the information identifying respective UEs corresponding to the aggregated local models may be identifiers of the UEs. For example, the UE may transmit the identifiers of the UEs while transmitting the aggregated model, such as encoding both the aggregated model and the UE identifiers in the same message. Alternatively, the UE may also transmit the aggregated model and the UE identifiers separately using separate messages.

For example, as described above, for UEs that have a sidelink transmission failure for a local model related to them (i.e., fails to transmit its local model to any UE in the UE group, and fails to successfully receive a local model of any other UE in the UE group), these UEs may upload their local models to the control device separately, or these UEs may be reorganized into one or more centralized and/or decentralized UE groups. For example, these UEs may determine how to operate according to default rules, such as uploading their local models to the control device separately by default, or negotiating by themselves by default to reorganize into one or more centralized and/or decentralized UE groups. Alternatively, these UEs may wait for further notification from the control device to determine how to operate. For example, the control device may further notify these UEs whether to transmit local models separately or to reorganize into UE groups (and how to constitute UE groups). For example, the control device may make the decision according to aggregation status of aggregated models that have been received, or may instruct these UEs to transmit further information (e.g., information indicating to which of these removed UEs local models have been successfully transmitted) to assist it in making the decision.

FIG. 7A illustrates a case where sidelink transmission of all local models is successful. In this case, each UE may aggregate local models of all UEs in the UE group (including its own local model) and upload the aggregated models $W_1^{t+1/2}$, $W_2^{t+1/2}$, $\cdots$ $W_M^{t+1/2}$ and IDs of the aggregated UEs, i.e., {1, 2, $\cdots$, M}, to the control device, so that the control device knows that each of these aggregated models has aggregated local models of UE#1 to UE#M. In response to the received information, the control device may aggregate the aggregated model uploaded by any one of UE#1 to UE#M with local models of other UEs in the wireless communication system that are not divided into the UE group, thereby aggregating local models of respective UEs participating in the Federated learning in a non-repetitive manner to generate a global model $W^{t+1}$.

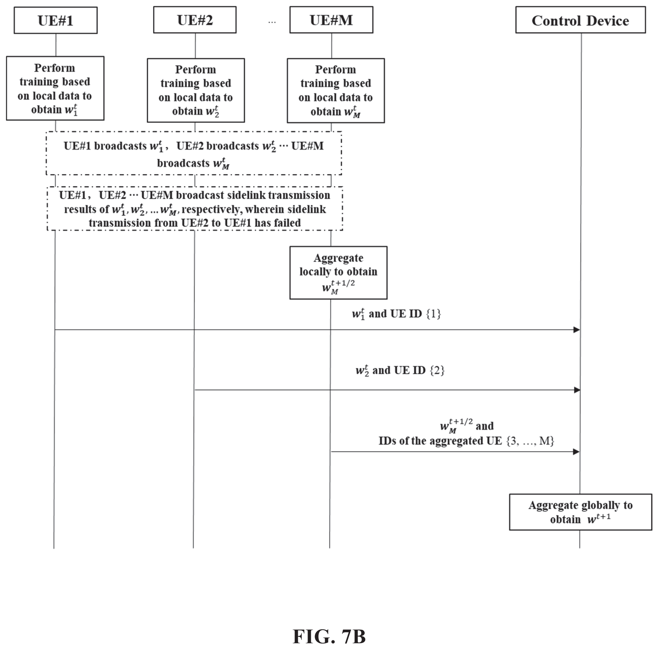

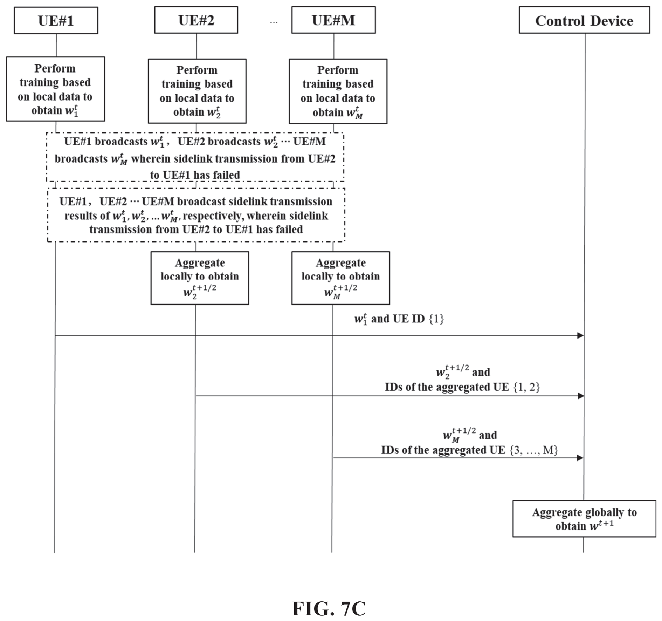

FIG. 7B and FIG. 7C illustrate the case where a sidelink transmission from UE#2 to UE 1 fails. In this case, as shown in FIG. 7B and FIG. 7C, all other UEs except UE#1 and UE#2 may determine to exclude UE#1 and UE#2 based on the sidelink transmission results broadcast in the UE group, and accordingly, aggregate local models of all UEs except UE#1 and UE#2 in the UE group (including their own local models), and upload the aggregated models $W_3^{t+1/2}$, $\cdots$ $W_M^{t+1/2}$ and IDs of the aggregated UEs, i.e., {3,..., M} to the control device, so that the control device knows that each of these aggregated models has aggregated the local models of UE#3 to UE#M. UE#1 and UE#2 may upload their local models to the control device separately as shown in FIG. 7B, and transmit their own identifiers together with their local models. Alternatively, UE#1 and UE#2 may also reorganized into a centralized UE group with UE#2 as the central UE as shown in FIG. 7C. Specifically, as shown in FIG. 7C, UE#2 may aggregate its local model with the local model of UE#1 to generate an aggregated model $W_2^{t+1/2}$, and upload the aggregated model and IDs {1, 2} of the aggregated UEs to the control device; while UE#1 may upload its local model and ID to the control device separately.

Specifically, in the case where UE#2 fails to transmit the local model to UE#1, the aggregated models to be uploaded by other UEs except UE#1 and UE#2 may be evolved from the above formula (12) to formula (12-1):

$$W_3^{t+1/2} = \cdots = W_M^{t+\frac{1}{2}} = W^{t+\frac{1}{2}} = \frac{1}{\sum_{m=3}^{M} n_3} \sum_{m=3}^{M} n_m W_m^t \qquad \text{Formula } (12-1)$$

As shown in FIG. 7B, in the case where UE#1 and UE#2 upload their local models separately, the global model to be generated by the control device may be evolved from the above formula (13) to formula (13-1):

$$W^{t+1} = \frac{1}{N}\left[ U_1 n_1 W_1^t + U_2 n_2 W_2^t + \sum_{k=M+1}^{K} U_k n_k W_k^t + \left[1 - \prod_{m=3}^{M}(1 - U_m)\right]\sum_{m=3}^{M} n_m W^{t+1/2}\right] \text{Formula } (13-1)$$

And the total data amount N of UE#1-UE#K may be evolved from the above formula (14) to formula (14-1):

$$N = U_1 n_1 + U_2 n_2 + \sum_{k=M+1}^{K} U_k n_k + \left[1 - \prod_{m=3}^{M}\left(1 - U_m\right)\right] \sum_{m=3}^{M} n_m \qquad \text{Formula}\left(14 - 1\right)$$

As shown in FIG. 7C, in the case where UE#1 and UE#2 are reorganized into a centralized UE group with UE#2 as the central UE, the global model to be generated by the control device may be evolved from the above formula (13) to formula (13-2):

$$W^{t+1} = \frac{1}{N}\left[\left(1 - U_2\right)U_1 n_1 W_1^t + U_2\left(n_1 + n_2\right)W_2^{t+1/2} + \sum_{k=M+1}^{K} U_k n_k W_k^t + \left[1 - \prod_{m=3}^{M}\left(1 - U_m\right)\right]\sum_{m=3}^{M} n_m\, W^{t+1/2}\right]$$
$$\text{Formula}\left(13 - 2\right)$$

And the total data amount N of UE#1-UE#K may be evolved from the above formula (14) into formula (14-2):

$$N = \left(1 - U_2\right)U_1 n_1 + U_2\left(n_1 + n_2\right) + \sum_{k=M+1}^{K} U_k n_k + \left[1 - \prod_{m=3}^{M}\left(1 - U_m\right)\right]\sum_{m=3}^{M} n_m\ \text{Formula}\left(14 - 2\right)$$

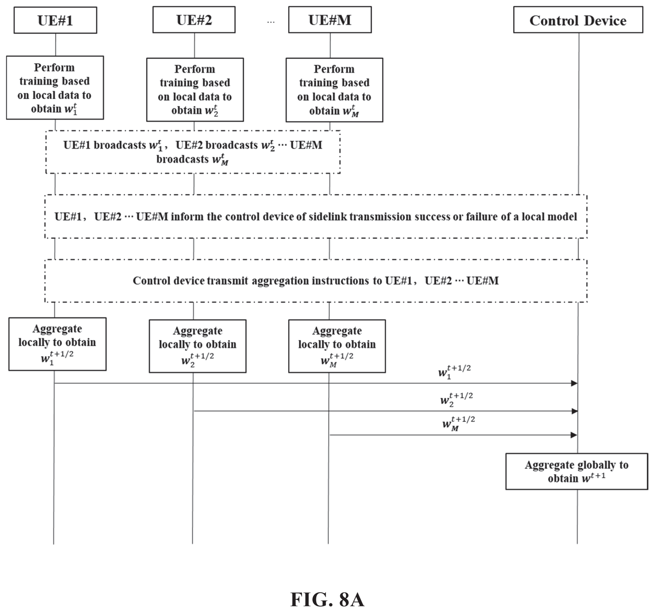

FIGS. 8A-8C schematically illustrate an exemplary information interaction according to a second implementation of the first embodiment of the present disclosure.

As shown in FIGS. 8A-8C, in the second implementation of the second embodiment, unlike the first implementation, each UE does not broadcast a sidelink transmission result of its local model to each UE in the UE group, but uploads information indicating the success or failure of transmitting its local model to the other UEs in the UE group to the control device. Each UE may transmit information in any appropriate manner so that the control device knows whether all sidelink transmissions of a local model of the UE are successful. For example, each UE may only notify the control device that it has failed to transmit its local model to one or more other UEs. For another example, each UE may notify the control device of sidelink transmission results of its local model to each of the other UEs. Preferably, any approach that ensures communication reliability (such as a retransmission mechanism, a repeated transmission mechanism, etc.) may be used to transmit information indicating whether a sidelink transmission of a local model is successful.

At least in response to a message received from each UE indicating whether a sidelink transmission of a local model is successful, the control device may determine whether each UE needs to aggregate which local models, and transmit an aggregation instruction to each UE, thereby indicating whether the UE shall aggregate a local model of the UE with local models of one or more other UEs, and when the aggregation is necessary, with which one or more other local models the local model of the UE should be aggregated.

For example, as shown in FIG. 8A, in a case where sidelink transmissions of all local models are successful, the control device may transmit an aggregation instruction to each UE in the UE group, indicating UE#1-UE#M to aggregate local models of UE#1-UE#M respectively. In response to the aggregation instruction, UE#1-UE#M may respectively generate and upload to the control device aggregated models $W_1^{t+1/2}$, $W_2^{t+1/2}$ ..., $W_M^{t+1/2}$ that have aggregated the local models of UE#1-UE#M. The control device may aggregate the aggregated model uploaded by any one of UE#1 to UE#M with local models of other UEs in the wireless communication system that are not divided into the UE group, thereby aggregating local models of respective UEs participating in the Federated learning in a non-repetitive manner to generate a global model $W^{t+1}$.

In the case that not all local models in the UE group are successfully transmitted to UE#M, the control device may determine which UEs to be removed from the original UE group based on sidelink transmission results received from respective UEs, and determine how the removed UEs should operate. For example, the control device may determine that these removed UEs need to upload their local models separately. For another example, the control device may reorganize these UEs into one or more centralized UE groups or decentralized UE groups. For example, the control device may determine whether to reorganize a group(s) and how to reorganize the group(s) according to information of the latest sidelink communication quality, uplink and downlink communication quality, computation capability, etc. of these UEs.

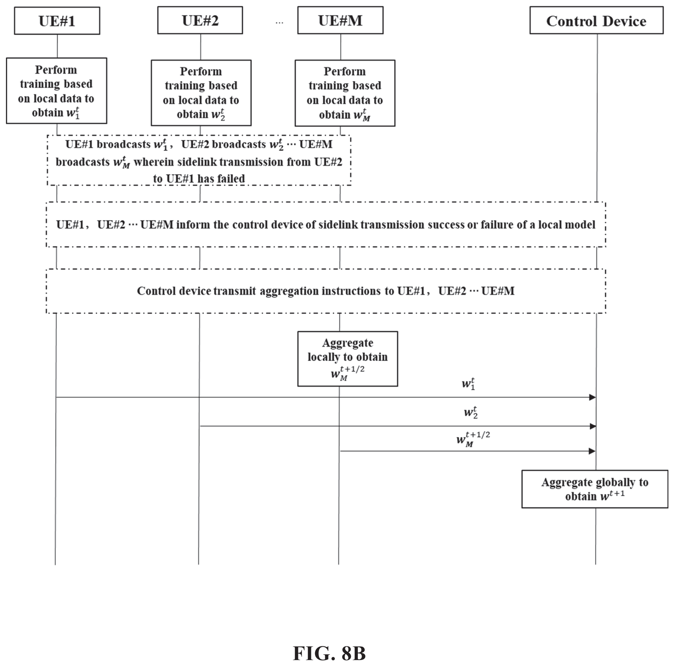

For example, in the case where UE#2 fails to transmit the local model to UE#1, as shown in FIG. 8B, the control device may transmit aggregation instructions to UE#1-UE#M respectively, indicating UE#1 and UE#2 to upload their local models separately, and indicating other UEs to aggregate local models of UE#3-UE#M. In response to the aggregation instruction, UE#1 and UE#2 may upload their local models $W_1^t$ and $W_2^t$ separately, and other UEs may generate and upload to the control device an aggregated model that aggregates local models of UE#3-UE#M. The control device may aggregate the received local model of UE#1, the local model of UE#2, the aggregated model uploaded by UE#3-UE#M, and local models of other UEs in the wireless communication system that are not divided into the UE group, thereby generating a global model $W^{t+1}$.

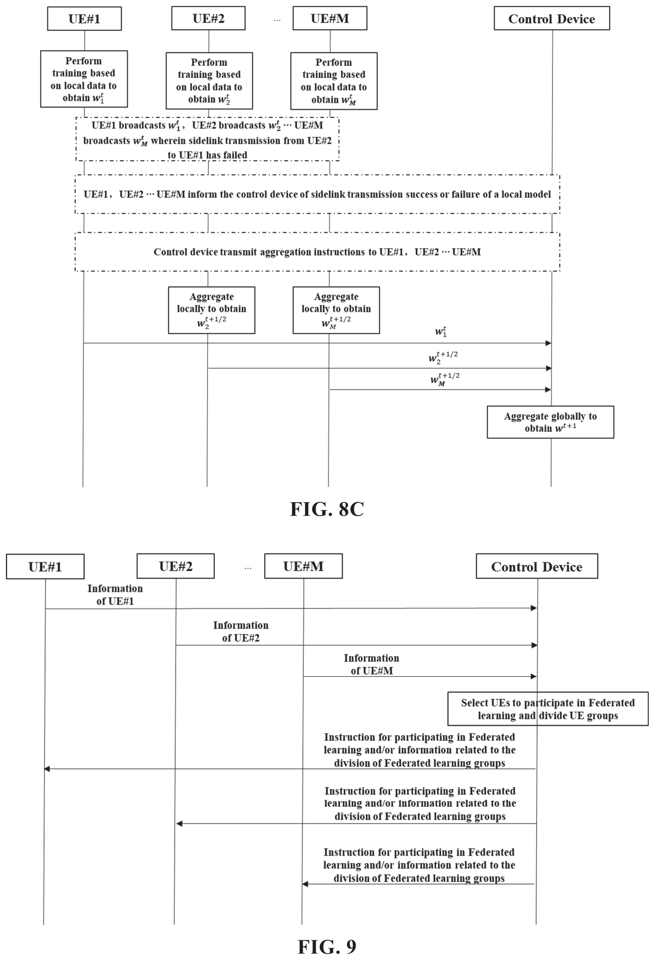

For another example, in the case where UE#2 fails to transmit the local model to UE#1, as shown in FIG. 8C, the control device may transmit aggregation instructions to UE#1-UE#M respectively, indicating UE#1 and UE#2 to constitute a centralized UE group and upload models accordingly, and indicating other UEs to aggregate local models of UE#3-UE#M. In response to the aggregation instruction, UE#1 may upload its local model $W_1^t$ separately, and UE#2 may aggregate its own local model with the local model of UE#1 to generate and upload the aggregated model $W_2^{t+1/2}$ to the control device, and other UEs may generate and upload to the control device an aggregated model that aggregates the local models of UE#3-UE#M. The control device may aggregate the received local model of UE#1, the aggregated model uploaded by UE#2, the aggregated models uploaded by UE#3-UE#M, and local models of other UEs in the wireless communication system that are not divided into the UE group, thereby generating a global model $W^{t+1}$.

The second embodiment according to the present disclosure has been described in detail with reference to the accompanying drawings. For ease of description, the above description is based on the existence of one decentralized UE group in the wireless communication system. It should be understood that any number of centralized UE groups may exist as appropriate.

The first embodiment and the second embodiment are described above respectively. According to the present disclosure, the first embodiment may be implemented in combination with the second embodiment, and one or more centralized UE groups and one or more decentralized UE groups may exist at the same time. More generally, in a wireless system, one or more centralized UE groups, one or more decentralized UE groups, and one or more UEs that are not divided into any UE group may exist in any appropriate combination.

As described in detail above in combination with the first embodiment and the second embodiment, in the Federated learning network of the present disclosure, in addition to traditional uplinks and downlinks, sidelinks between UEs are also used to transmit local models, thereby improving the contribution rate of the local model of each UE to the global model. Due to the introduction of the sidelink, in the solution of the present disclosure, when selecting UEs from the wireless communication network to participate in Federated learning, in addition to the traditional selection factors, UEs may also be selected based on some additional factors. This is described in detail below.

According to the present disclosure, the control device may select a UE to participate in Federated learning based on at least one or more of the following information:

- information related to sidelink status of the UE, for example, the information may at least indicate which one or more UEs in the wireless communication system have a sidelink with the UE, and communication quality of the sidelink(s);
- position information of the UE;
- information indicating communication quality of an uplink and a downlink of the UE;
- information indicating computation capability of the UE; and
- information indicating an amount of user data of the UE for generation of a local model.

For example, the information related to communication quality may be any information that may indicate the communication quality, such as Reference Signal Receiving Power (RSRP), Reference Signal Receiving Quality (RSRQ), Reference Signal Strength Indicator (RSSI) and Signal to Noise Ratio (SNR), and so on.

For example, the position information may be any applicable information indicating location of a UE, such as position information obtained based on any positioning technology (such as Global Positioning System (GPS), Assisted-Global Navigation Satellite System (A-GNSS), motion sensor-based positioning, etc.), Uplink/Downlink-Time Difference of Arrival (UL/DL-TDOA), Multi-Round Trip Time (Multi-RTT) and New Radio Enhanced Cell ID (NR Enhanced Cell ID, E-CID), and so on.

For example, the information indicating computing capability of the UE may be, for example, CPU occupancy rate and parameters characterizing the performance of the processing itself.

The control device may obtain these information in any appropriate manner. For example, one or more of these information may be directly uploaded by the UE to the control device. For another example, in the case where the control device is a network element in the core network responsible for the Federated learning function, one or more of these information may be obtained by the control device from an associated base station. For example, the network element may request one or more of these information from the base station. For another example, in the case where the control device is a base station, one or more of these information (for example, the position information of the UE and the communication quality of the uplink and downlink of the UE) may be calculated by the control device itself based on measurement.

According to the present disclosure, the control device may select UEs to participate in Federated learning based on the above information, and advantageously, some of these UEs may be UEs that cannot be selected to participate in Federated learning based on traditional Federated learning. For example, the control device may also enable more UEs to participate in Federated learning by dividing a UE group(s) based on the above information.

For example, for one or more UEs that meet the requirements for participating in Federated learning in basic conditions such as computation capability and a user data amount, etc., but whose uplink and downlink communication quality does not meet the requirements for participating in Federated learning:

(1) if the following UE exist near the one or more UEs, a centralized UE group may be constituted with the UE to participate in Federated learning:

- basic conditions such as computation capability and a user data amount, etc., and the quality of uplink and downlink communication meet the requirements for participating the Federated learning,
- there is a sidelink with the one or more UEs whose communication quality meets the requirements, and
- the computation capability is sufficient to support aggregation operation of models;

(2) If there are sidelinks between the one or more UEs with communication quality that meets the requirements and the computation capability of the one or more UEs is sufficient to support the aggregation operation of the models, the one or more UEs may constitute a decentralized UE group to participate in Federated learning;

(3) If there are sidelinks between the one or more UEs with communication quality that meets the requirements, and there are sidelinks with communication quality that meets the requirements between the one or more UEs and one or more other UEs whose basic conditions and uplink and downlink communication quality meet the requirements for participating the Federated learning, and the computation capability of the one or more UEs and the other one or more UEs is sufficient to support the aggregate operation of the models, then the one or more UEs may constitute a decentralized UE group with the other one or more UEs to participate in Federated learning.

For another example, for one or more UEs that particularly expect to participate in Federated learning but whose uplink and downlink communication quality cannot meet traditional Federated learning requirements (for example, they may have important local data), the control device may also divide the UE groups based on the above information to ensure that the one or more UEs may participate in Federated learning. For example:

(1) If the following UE exist near the one or more UEs, even if the amount of user data of the UE is small (for example, it does not meet the traditional criteria for participating in Federated learning), the UE and the one or more UEs is enabled to constitute a centralized UE group to participate in Federated learning:

- the uplink and downlink communication quality meets the participation requirements of Federated learning,
- there is a sidelink with the one or more UEs whose communication quality meets the requirements, and
- the computation capability is sufficient to support the aggregation operation of the models;

(2) If there are sidelinks between the one or more UEs with communication quality that meets the requirements and the computation capability of the one or more UEs is sufficient to support the aggregation operation of the models, the one or more UEs may constitute a decentralized UE group to participate in Federated learning;

(3) If there are sidelinks between the one or more UEs whose communication quality meets the requirements, and there are sidelinks between the one or more UEs and one or more other UEs whose uplink and downlink communication quality meets the requirements for participating in Federated learning, and the computation capability of the one or more UEs and the other one or more UEs is sufficient to support the aggregation operation of the models, then the one or more UEs may constitute a decentralized UE group with the other one or more UEs to participate in Federated learning, even if the amount of user data of the other one or more UEs is small (for example, does not meet the traditional criteria for participating in Federated learning).

The above illustrates two examples of enabling UEs that cannot meet the traditional Federated learning conditions to participate in the Federated learning according to the present disclosure by dividing into UE groups. It should be understood that even for respective UEs that meet the traditional Federated learning conditions, the UEs may be divided into a group according to the first embodiment or the second embodiment of the present disclosure based on one or more of the above information. For example, for one or more UEs whose uplink and downlink communication quality meets the requirements for participating in Federated learning but whose communication quality is relatively low:

(1) if the following UE exist near the one or more UEs, a centralized UE group may be constituted with the UE to participate in Federated learning:

- with high communication quality of uplink and downlink,
- there is a sidelink with the one or more UEs whose communication quality meets the requirements, and
- the computation capability is sufficient to support the aggregation operation of the models;

(2) If there are sidelinks between the one or more UEs with communication quality that meets the requirements and the computation capability of the one or more UEs is sufficient to support the aggregation operation of the models, the one or more UEs may constitute a decentralized UE group to participate in Federated learning;

(3) If there are sidelinks between the one or more UEs with communication quality that meets the requirements, and there are sidelinks between the one or more UEs with other one or more UEs with higher uplink and downlink communication quality that meet the requirements, and the computation capability of the one or more UEs and the other one or more UEs is sufficient to support aggregate operation of the models, then the one or more UEs may constitute a decentralized UE group with the other one or more UEs to participate in Federated learning.

In particular, according to the present disclosure, the same UE will not be divided into different UE groups for Federated learning, that is, the same UE will not participate in a plurality of UE groups for Federated learning at the same time. In addition, according to the present disclosure, the division of UE groups may be adjusted dynamically.

FIG. 9 schematically illustrates an exemplary information interaction for selecting UEs to participate in Federated learning and dividing UE groups for Federated learning according to an embodiment of the present disclosure. As shown in FIG. 9, each UE in a wireless communication network may upload information related to the UE to a control device. As described in detail above, the information may be at least one or more of the following information: information related to sidelink status of a UE, position information of a UE, information indicating communication quality of an uplink and downlink of a UE, information indicating computation capability of a UE, and information indicating an amount of user data of a UE for generation of a local model. For example, these information may be transmitted directly to the control device (for example, when the control device is a base station), or may be received by the control device via forwarding by another/other device(s) (when the control device is a network element of the core network, by a base station and another/other network element (s) in the core network as appropriate). In addition, although not explicitly shown in FIG. 9, the control device may also determine some of these information by itself.

Next, the control device may determine UEs to participate in Federated learning and divide into UE groups based on one or more of these information. Subsequently, the control device may notify each UE of an instruction for participating in Federated learning and/or information related to the division of Federated learning groups. For example, these information may include information indicating whether a UE participates in Federated learning alone or in the form of a UE group, information indicating whether the UE group in which a UE participates is a centralized UE group or a decentralized UE group, and information indicating the role of a UE in a UE group (for example, whether it is a central UE). For example, these information may be transmitted directly to each UE (for example, when the control device is a base station), or it may be received by each UE via forwarding by other devices (when the control device is a network element of the core network, by a base station and another/other network element (s) in the core network as appropriate). The control device may notify these information in any appropriate manner.

The specific solution of the present disclosure has been described in detail with reference to the accompanying drawings. Advantageously, according to the present disclosure, the contribution rate of the local model of each UE (especially the UE with poor uplink communication quality) to the global model may be increased without increasing the amount of uplink data of the UE, thereby avoiding the global model from being biased toward the UE with better communication quality, thereby improving the efficiency of Federated learning as a whole. In addition, according to the present disclosure, the participation criteria of Federated learning may be appropriately relaxed so that more UEs may participate in Federated learning, or the desired UEs may be ensured to participate in Federated learning.

The conceptual configuration and conceptual operation flow of a control device and terminal device to which the solution of the present disclosure is applicable will be described below with reference to the accompanying drawings.

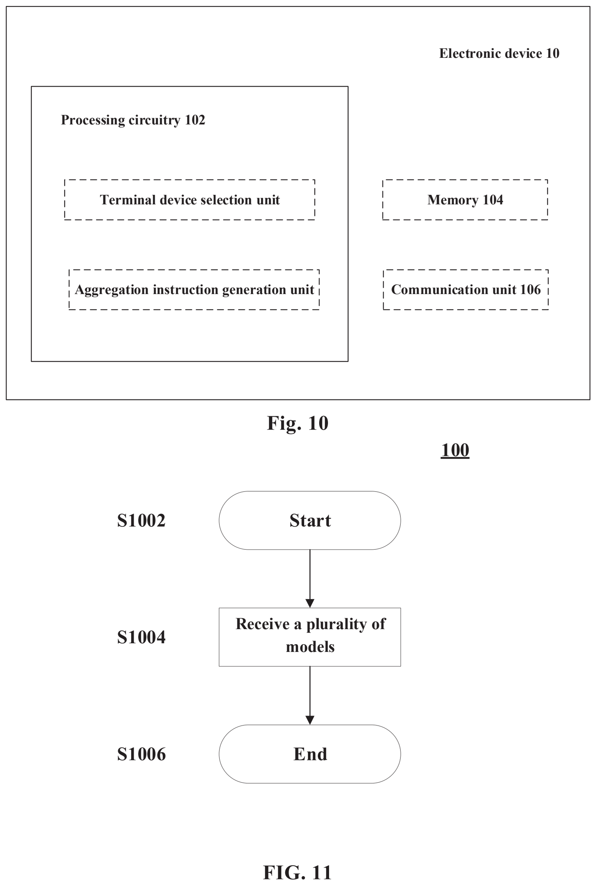

FIG. 10 schematically illustrates a conceptual configuration of an electronic device on the Federated learning control device side according to an embodiment of the present disclosure.

FIG. 10, the electronic device 10 may include a processing circuitry 102. The processing circuitry 102 may be configured to receive a plurality of models associated with a plurality of terminal devices in a wireless communication system, wherein the plurality of models include at least one aggregated model. As described in detail above, each of the at least one aggregated model may be generated by a corresponding terminal device aggregating its local model with respective one or more local models from one or more other terminal devices, and each local model is obtained by a corresponding terminal device performing training based on local data of the terminal device. In particular, as described with reference to the first embodiment, the plurality of models may also include one or more local models, wherein at least one of the one or more local models is the same as at least one of the local models aggregated by the at least one aggregated model.

The processing circuitry 102 may be in the form of a general-purpose processor or a special-purpose processing circuit, such as an ASIC. For example, the processing circuitry 102 can be constructed by a circuit (hardware) or a central processing device (such as, a Central Processing Unit (CPU)). In addition, a program (software) for operating the circuit (hardware) or the central processing device may be carried on the processing circuitry 102. The program can be stored in a memory (such as arranged in a memory 104) or an external storage medium connected from outside, and downloaded via a network (such as the Internet).

In one optional implementation, the processing circuitry 102 may include a terminal device selection unit. For example, the control information determination unit may determine which terminal devices may participate in Federated learning based on information related to the terminal devices. For another example, the control information determination unit may determine, based on information related to the terminal devices, to divide at least some of the terminal devices participating in the Federated learning into one or more terminal device groups according to the first embodiment and/or one or more terminal device groups according to the second embodiment.

In one optional implementation, the processing circuitry 102 may further include an aggregation instruction generation unit. The aggregation instruction generation unit may, for example, determine an aggregation instruction in response to at least local model sidelink transmission result information uploaded by a terminal device. As described above, the aggregation instruction may indicate whether the terminal device shall aggregate a local model of the terminal device with local models of one or more other terminal devices, and when the aggregation is necessary, with which local models of one or more other terminal devices the local model of the terminal device shall be aggregated.

Optionally, the electronic device 10 may also include a memory 104 and a communication unit 106 shown in dashed lines in the figure. In addition, the electronic device 10 may also include other components not shown, such as a network interface, a processor, a controller, a radio frequency link, a baseband processing unit, and the like. The processing circuitry 102 may be associated with the memory 104 and/or the communication unit 106. For example, the processing circuitry 102 may be directly or indirectly (for example, other components may be connected therebetween) connected to the memory 104 for data access. For another example, the processing circuitry 102 may be directly or indirectly connected to the communication unit 106 to transmit signals via the communication unit 106 and to receive signals via the communication unit 106.

The memory 104 may store various information determined and/or generated by the processing circuitry 102 (for example, local/aggregated models uploaded by terminal devices, sidelink transmission results of local models of terminal devices, information for selecting terminal devices participating in Federated learning and/or grouping terminal devices, etc.), programs and data for operations of the electronic device 10, data to be transmitted by the communication unit 106, etc. The memory 104 is drawn with dashed lines because it could also be located within the processing circuitry 102 or external to the electronic device 10. The memory 104 may be a volatile memory and/or a non-volatile memory. For example, the memory 104 may include, but is not limited to, a random-access memory (RAM), a dynamic random-access memory (DRAM), a static random-access memory (SRAM), a read only memory (ROM), and a flash memory.

The communication unit 106 may be configured to communicate with a terminal device under the control of the processing circuitry 102. In one example, the communication unit 106 may be implemented as a transmitter or a transceiver, including communication components such as an antenna array and/or a radio frequency link. In one example, the communication unit 106 may be implemented as a communication component that communicates via a cable.

Although the processing circuitry 102 is shown as being separated from the communication unit 106 in FIG. 10, the processing circuitry 102 may also be implemented to include the communication unit 106, for example, in combination with a communication control unit. Additionally, the processing circuitry 102 may also be implemented to include one or more other components in the electronic device 10, or the processing circuitry 102 may be implemented as the electronic device 10 itself. In an actual implementation, the processing circuitry 102 may be implemented as a chip (such as an integrated circuit module comprising a single wafer), a hardware component, or a complete product.

It should be noted that the above units are only logical modules divided according to specific functions they implement, and are not used to limit specific implementations, for example, they can be implemented in software, hardware, or a combination of software and hardware. In an actual implementation, each of the above units may be implemented as an independent physical entity, or may also be implemented by a single entity (for example, a processor (CPU or DSP, etc.), an integrated circuit, etc.). In addition, each of the above units is shown with dashed lines in the drawings to indicate that these units may not actually exist, and the operations/functions they realized may be realized by the processing circuitry itself. In addition, the processing circuitry may also include other units for implementing the various functions of the control device described above.

FIG. 11 schematically illustrates a conceptual operation flow 100 of an electronic device 10 on a control device side according to an embodiment of the present disclosure.

The operation of the electronic device 10 starts at S1002.

At S1004, the electronic device 10 receives a plurality of models associated with a plurality of terminal devices in a wireless communication system, wherein the plurality of models include at least one aggregated model. As described in detail above, each aggregated model in the at least one aggregated model may be generated by a corresponding terminal device aggregating its local model with respective one or more local models from one or more other terminal devices, and each local model is obtained by a corresponding terminal device performing training based on local data of the terminal device.

The operation of the electronic device 10 ends at S1006.

It should be noted that the operation steps of the electronic device 10 on the control device side shown in FIG. 11 are merely illustrative. The operations of the electronic device 10 may also include additional or alternative steps described in detail above. For example, the electronic device 10 may also receive information indicating sidelink transmission results of local models of terminal devices from the terminal devices, and generate and transmit aggregation instructions based at least on the information. For another example, before S1004, the electronic device 10 may also receive information from terminal devices in the wireless communication system to determine terminal devices participating in Federated learning, and divide at least some of the terminal devices into one or more terminal device groups according to the first embodiment and/or one or more terminal device groups according to the second embodiment, and notify each terminal device accordingly. In addition, the electronic device may also aggregate the received models to generate a global model.

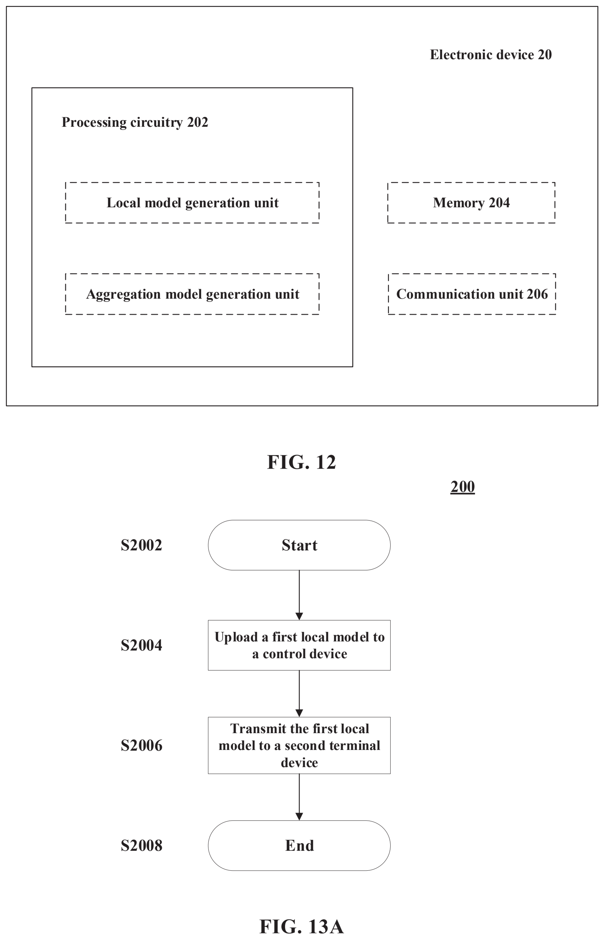

FIG. 12 schematically illustrates a conceptual configuration of an electronic device 20 on a terminal device side according to an embodiment of the present disclosure.

As shown in FIG. 12, the electronic device 20 may include a processing circuitry 202. The processing circuitry 202 may be configured to execute operations of a non-central terminal device according to the first embodiment, operations of a central terminal device according to the first embodiment, and operations of a terminal device according to the second embodiment described in detail above.

The processing circuitry 202 may be in the form of a general-purpose processor or a special-purpose processing circuit, such as an ASIC. For example, the processing circuitry 202 can be constructed by a circuit (hardware) or a central processing device (such as, a Central Processing Unit (CPU)). In addition, a program (software) for operating the circuit (hardware) or the central processing device may be carried on the processing circuitry 202. The program can be stored in a memory (such as arranged in a memory 204) or an external storage medium connected from outside, and downloaded via a network (such as the Internet).

In one implementation, the processing circuitry 202 may include a local model generation unit. The local model generation unit may perform training based on local data to generate a local model of the electronic device 20.

In one implementation, the processing circuitry 202 may further include an aggregated model generation unit. The aggregated model generation unit may, for example, aggregate a local model generated by the local model generation unit with a local model(s) of another/other terminal device(s) received via a sidelink to generate an aggregated model.

Optionally, the electronic device 20 may also include a memory 204 and a communication unit 206 shown in dashed lines in the figure. In addition, the electronic device 20 may also include other components not shown, such as a radio frequency link, a baseband processing unit, a network interface, a processor, a controller, etc. The processing circuitry 202 may be associated with the memory 204 and/or the communication unit 206. For example, the processing circuitry 202 may be directly or indirectly (for example, other components may be connected therebetween) connected to the memory 204 for data access. For another example, the processing circuitry 202 may be directly or indirectly connected to the communication unit 206 to transmit radio signals via the communication unit 206 and to receive radio signals via the communication unit 206.

The memory 204 may store various information determined and/or generated by the processing circuitry 202 (for example, local data, a local model generated by the electronic device 20 itself, a local model(s) of another/other terminal device(s), global models transmitted by the control device, etc.), programs and data for operations of the electronic device 20, data to be transmitted by the communication unit 206, etc. The memory 204 is drawn with dashed lines because it could also be located within the processing circuitry 202 or external to the electronic device 20. The memory 204 may be a volatile memory and/or a non-volatile memory. For example, the memory 204 may include, but is not limited to, a random-access memory (RAM), a dynamic random-access memory (DRAM), a static random-access memory (SRAM), a read only memory (ROM), and a flash memory.

The communication unit 206 may be configured to communicate with a terminal device under the control of the processing circuitry 202. In one example, the communication unit 206 may be implemented as a transmitter or a transceiver, including communication components such as an antenna array and/or a radio frequency link.

Although the processing circuitry 202 is shown as being separated from the communication unit 206 in FIG. 12, the processing circuitry 202 may also be implemented to include the communication unit 206, for example, in combination with the communication control unit. Additionally, the processing circuitry 202 may also be implemented to include one or more other components in the electronic device 10, or the processing circuitry 202 may be implemented as the electronic device 10 itself. In an actual implementation, the processing circuitry 102 may be implemented as a chip (such as an integrated circuit module comprising a single wafer), a hardware component, or a complete product.

It should be noted that the above units are only logical modules divided according to specific functions they implement, and are not used to limit specific implementations, for example, they can be implemented in software, hardware, or a combination of software and hardware. In an actual implementation, each of the above units may be implemented as an independent physical entity, or may also be implemented by a single entity (for example, a processor (CPU or DSP, etc.), an integrated circuit, etc.). In addition, each of the above units is shown with dashed lines in the drawings to indicate that these units may not actually exist, and the operations/functions they realized may be realized by the processing circuitry itself. In addition, the processing circuitry may also include other units for implementing the various functions of the control device described above.

FIG. 13A schematically illustrates a conceptual operation flow 200 of an electronic device 20 according to the present disclosure when acting as a non-central terminal device (hereinafter referred to as a first terminal device) in the first embodiment.

The operation of the first terminal device starts at S2002.

At S2004, the first terminal device uploads a first local model obtained by performing training based on local data to a control device of the wireless communication system.

At S2006, the first terminal device transmits the first local model to a second terminal device of the wireless communication system (i.e., as described above, a central terminal device in a terminal device group to which the first terminal device belongs) via sidelink communication, for the second terminal device to generate an aggregated model.

The operation of the first terminal device ends at S2008.

It should be noted that the operation steps of the first terminal device on the control device side shown in FIG. 13A are merely illustrative. The operations of the first terminal device may also include additional or alternative steps described in detail above. For example, the first terminal device may also upload to the control device information indicating transmission success or failure of a first local model to the second terminal device. In addition, the execution order of the operations shown in FIG. 13A is merely illustrative, for example, the operations at S2004 and S2006 may be performed in reverse order or synchronously.

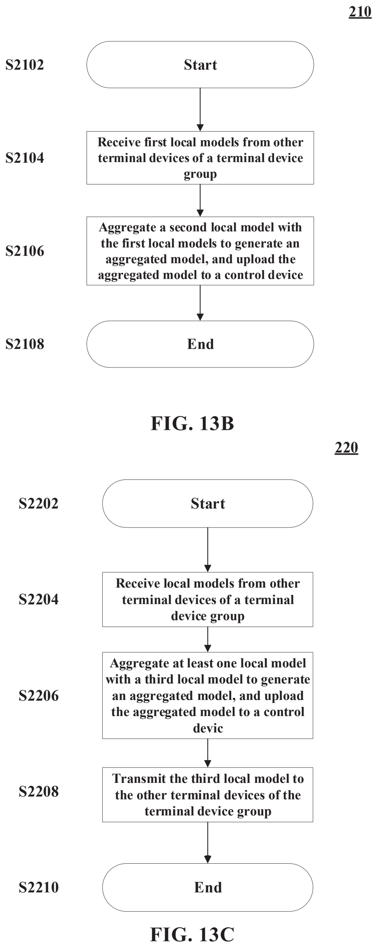

FIG. 13B schematically illustrates a conceptual operation flow 210 of the electronic device 20 according to the present disclosure when acting as a central terminal device (hereinafter referred to as a second terminal device) in the first embodiment.

The operation of the second terminal device starts at S2102.

At S2104, the second terminal device receives at least one first local model from at least one first terminal device of a wireless communication system via sidelink communication, each of the at least one first local model being obtained by one of the at least one first terminal device performing training based on its local data.

At S2106, the second terminal device aggregates a second local model obtained by performing training based on the local data with the at least one first local model to generate an aggregated model, and uploads the aggregated model to a control device of the wireless communication system.

The operation of the second terminal device ends at S2108.

It should be noted that the operation steps of the second terminal device on the control device side shown in FIG. 13B are merely illustrative. The operations of the second terminal device may also include additional or alternative steps described in detail above. For example, the second terminal device may also upload information identifying respective terminal devices corresponding to the aggregated local models together with the aggregated model. For example, the second terminal device may also receive an aggregation instruction from the control device.

FIG. 13C schematically illustrates a conceptual operation flow 220 of the electronic device 20 according to the present disclosure when acting as a terminal device (hereinafter referred to as a third terminal device) in the second embodiment.

The operation of the third terminal device starts at S2202.

At S2204, the third terminal device may receive at least one local model from at least one other terminal device in a terminal device group via sidelink communication, each of the at least one local model being obtained by one of the at least one other terminal device performing training based on its local data.

At S2206, the third terminal device may aggregate a third local model obtained by performing training based on local data with at least one of the received at least one local model to generate an aggregated model, and upload the aggregated model to a control device.

At S2208, the third terminal device may transmit the third local model to the other terminal device(s) in the terminal device group via sidelink communication, for the other terminal devices to generate aggregated models.

The operation of the third terminal device ends at S2210.

It should be noted that the operation steps of the third terminal device on the control device side shown in FIG. 13C are merely illustrative. The operations of the third terminal device may also include additional or alternative steps described in detail above. For example, the third terminal device may also transmit/receive sidelink transmission results of respective local models in the terminal device group, and determine which local models to aggregate accordingly. For another example, the third terminal device may also upload sidelink transmission results of its local model in the terminal device group to the control device, and receive an aggregation instruction. In addition, the execution order of the operations shown in FIG. 13C is merely illustrative, for example, the operations at S2204 and S2208 may be performed in reverse order or synchronously.

In addition, whether acting as a first terminal device, a second terminal device, or a third terminal device, the electronic device 20 may upload to the control device information related to one or more of sidelink status, communication quality, location, computation capability, and an amount of user data, and receive instructions from the control device to participate in Federated learning or information related to the division of terminal device groups.

As described above, the control device of the present disclosure may be a control device (e.g., a base station) on the access network side of a wireless communication system, or may be a device (e.g., a network element device) on the core network side of a wireless communication system. Accordingly, the operations of the control device described above may be performed by a base station, performed by a network element device, or even partially performed by a base station and partially performed by a network element device. In the latter case, which of these operations are specifically performed by the base station and the network element device respectively may be determined according to actual conditions, or may be specified by corresponding standards.

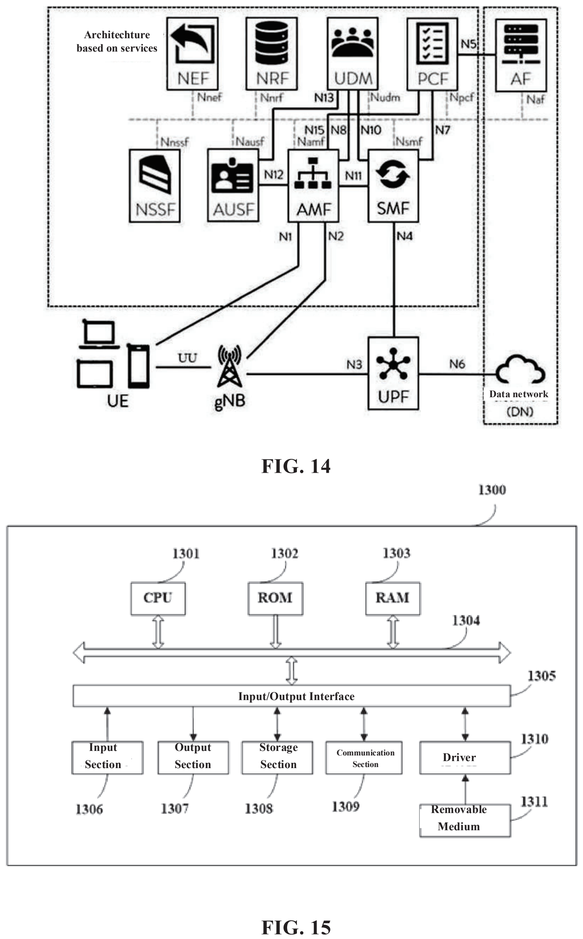

In particular, the control device according to the present disclosure may be one or more network element devices in the core network for implementing an application function (AF). The following will refer to FIG. 14 to illustrate an information transfer path according to the present disclosure in this implementation.

FIG. 14 schematically illustrates an overall architecture of a wireless communication system to which an embodiment of the present disclosure is applicable. The network elements/functions on the core network side involved in FIG. 14 are as follows:

- UPF: User Plane Function
- NEF: Network Exposure Function
- NRF: Network Repository Function
- UDM: Unified Data Management
- PCF: Policy Control Function
- AF: Application Function
- NSSF: Network Slice Selection Function
- AUSF: Authentication Server Function
- AMF: Access and Mobility Management Function
- SMF: Session Management Function

In the schematic overall architecture of FIG. 14, for example, a model to be uploaded by each UE (e.g., a local model or an aggregated model) may be uploaded to an AF acting as a control device via the gNB and UPF. In addition, the AF acting as a control device may obtain information about sidelink status of the UE from the NEF. For example, the information about the sidelink status of the UE may be stored at the NEF, or reported from the UE to the AF via the NEF via any appropriate path shown in FIG. 14. In addition, other information described above, such as information to be uploaded by a UE to a control device (such as position information of the UE, communication quality information of an uplink and downlink, computation capability and an amount of user data for generation of a local model, etc.) and information to be transmitted by the control device to the UE (such as, an aggregation instruction, a global model and information related to the division of UE groups, etc.) may be transferred between the UE and the AF via any feasible path shown in FIG. 14.

It should be noted that FIG. 14 only show an exemplary overall architecture of a wireless communication system to which an embodiment of the present disclosure is applicable. The architecture of the wireless communication system may also include any appropriate functions/network elements and/or interfaces.

It should be understood that machine-executable instructions in a machine-readable storage medium or a program product according to embodiments of the present disclosure may be configured to perform operations corresponding to the device and method embodiments described above. When referring to the above device and method embodiments, the embodiments of the machine-readable storage medium or program product will be apparent to those skilled in the art, and therefore description thereof will not be repeated. The machine-readable storage medium and the program product for carrying or including the above machine-executable instructions also fall within the scope of the present disclosure. Such a storage medium may include, but are not limited to, a floppy disk, an optical disk, a magneto-optical disk, a memory card, a memory stick, and the like.

In addition, it should be understood that the series of processes and devices described above may also be implemented by software and/or firmware. In the case of be implemented by software and/or firmware, a program constituting the software is installed from a storage medium or a network to a computer having a dedicated hardware structure, for example, a general-purpose computer/computer system 1300 shown in FIG. 15, which, when installed with various programs, can perform various functions and the like. FIG. 15 is a block diagram showing an example structure of a computer/computer system as an information processing device that may be employed in an embodiment of the present disclosure. In one example, the computer may correspond to the above exemplary terminal device according to the present disclosure. In another example, the computer may correspond to a network element device that acts as the above exemplary control device according to the present disclosure. In the case of acting as a network element device, although it is shown as a single structural block diagram, the functions of the computer/computer system 1300 may be implemented as a distributed system. For example, some processing may be performed using one processor while other processing may be performed using other remote processors. Other elements of the computer/computer system 1300 may also be distributed similarly. In addition, the functions disclosed herein may be implemented on separate servers or devices that may be coupled together through a network. In addition, one or more components of the system 1300 may not be included.

In FIG. 15, a central processing unit (CPU) 1301 executes various processes according to a program stored in a read only memory (ROM) 1302 or a program loaded from a storage section 1308 to a random-access memory (RAM) 1303. In the RAM 1303, data required when the CPU 1301 executes various processes and the like is also stored as necessary.

The CPU 1301, ROM 1302, and RAM 1303 are connected to each other via a bus 1304. The input/output interface 1305 is also connected to the bus 1304.

The following components are connected to the input/output interface 1305: an input section 1306 including a keyboard, a mouse, etc.; an output section 1307 including a display such as a cathode ray tube (CRT), a liquid crystal display (LCD), etc., and a speaker, etc.; a storage section 1308, including a hard disk, etc.; and a communication section 1309, including a network interface card such as a LAN card, a modem, and the like. The communication section 1309 performs communication processing via a network such as the Internet.

A driver 1310 is also connected to the input/output interface 1305 as needed. A removable medium 1311 such as a magnetic disk, an optical disk, a magneto-optical disk, a semiconductor memory, and the like is mounted on the drive 1310 as needed, so that a computer program read therefrom is installed into the storage section 1308 as needed.

In the case that the series of processing described above is implemented by software, a program constituting the software is installed from a network such as the Internet or a storage medium such as a removable medium 1311.

Those skilled in the art should understand that such a storage medium is not limited to the removable medium 1311 shown in FIG. 15 in which a program is stored and distributed separately from the device to provide the program to the user. Examples of the removable medium 1311 include a magnetic disk (including a floppy disk (registered trademark)), an optical disk (including a compact disk read-only memory (CD-ROM) and digital versatile disk (DVD)), a magneto-optical disk (including a mini disc (MD) (registered trademark)) and a semiconductor memory. Alternatively, the storage medium may be the ROM 1302, a hard disk contained in the storage section 1308, or the like, in which programs are stored and distributed to users together with devices containing them.

The techniques of the present disclosure can be applied to various products.

For example, the electronic device 10 according to an embodiment of the present disclosure may be implemented as or included in various base stations. For example, the electronic device 10 according to an embodiment of the present disclosure may also be implemented as various information processing devices employing, for example, the architecture shown in FIG. 15 or included in various information processing devices. For example, the electronic device 20 according to an embodiment of the present disclosure may be implemented as or included in various terminal devices/user devices.

For example, the base station mentioned in this disclosure can be implemented as any type of base station, e.g., an evolved Node B (gNB), such as a macro gNB and a small gNB. The small gNB may be a gNB covering a cell smaller than a macro cell, such as a pico gNB, a micro gNB, and a home (femto) gNB. Alternatively, the base station may be implemented as any other type of base station, such as a NodeB and a Base Transceiver Station (BTS). The base station may include: a body (also referred to as a base station device) configured to control wireless communication; and one or more Remote Radio Heads (RRHs) disposed at a different place from the body. In addition, various types of terminals to be described below can each operate as a base station by temporarily or semi-permanently performing base station functions.

For example, the terminal device mentioned in this disclosure, also referred to as a user device in some examples, can be implemented as a mobile terminal (such as a smart phone, a tablet personal computer (PC), a notebook PC, a portable game terminal, a portable/dongle type mobile router and a digital camera) or a vehicle-mounted terminal (such as a car navigation device). The user device may also be implemented as a terminal performing machine-to-machine (M2M) communication (also referred to as a machine type communication (MTC) terminal). In addition, the user device may be a wireless communication module (such as an integrated circuit module including a single wafer) mounted on each of the above terminals.

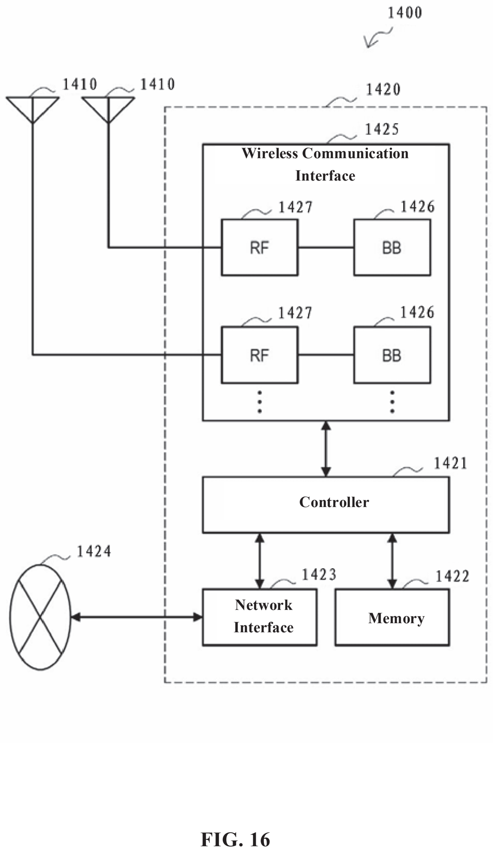

Examples according to the present disclosure will be described below with reference to FIGS. 16 to 19.

[Examples about Base Stations]

It should be understood that the term base station in this disclosure has its full breadth of ordinary meaning and includes at least a wireless communication station used as part of a wireless communication system or a radio system to facilitate communication. Examples of base stations may be, for example but not limited to: a base station may be one or both of a base transceiver station (BTS) and a base station controller (BSC) in a GSM system, may be one or both of a radio network controller (RNC) and Node B in a WCDMA system, may be an eNB in a LTE and LTE-Advanced system, may be an gNB, eLTE eNB, etc. appearing in a 5G communication system, or may be a corresponding network node in a future communication system. Part of the functions in the base stations of the present disclosure may also be implemented as an entity that has control functions for communication in D2D, M2M and V2V communication scenarios, or as an entity that plays a spectrum coordination role in cognitive radio communication scenarios.

First Example

FIG. 16 is a block diagram showing a first example of a schematic configuration of a gNB to which the technology of the present disclosure can be applied. The gNB 1400 includes multiple antennas 1410 and a base station device 1420. The base station device 1420 and each antenna 1410 may be connected to each other via an RF cable. In one implementation, the gNB 1400 (or the base station device 1420) here may correspond to the above electronic device 10 and/or the electronic device 80.

Each of the antennas 1410 includes a single or multiple antenna elements (such as multiple antenna elements included in a Multiple Input Multiple Output (MIMO) antenna), and is used by the base station device 1420 to transmit and receive wireless signals. As shown in FIG. 16, the gNB 1400 may include multiple antennas 1410. For example, the multiple antennas 1410 may be compatible with multiple frequency bands used by the gNB 1400.

The base station device 1420 includes a controller 1421, a memory 1422, a network interface 1423 and a wireless communication interface 1425.

The controller 1421 may be, for example, a CPU or a DSP, and operates various functions of a higher layer of the base station device 1420. For example, the controller 1421 generates a data packet according to data in a signal processed by the wireless communication interface 1425 and transfers the generated packet via the network interface 1423. The controller 1421 may bundle data from a plurality of baseband processors to generate a bundled packet, and transfer the generated bundled packet. The controller 1421 may have logic functions to perform controls such as radio resource control, radio bearer control, mobility management, admission control and scheduling. These controls can be performed in conjunction with nearby gNBs or core network nodes. The memory 1422 includes RAM and ROM, and stores programs executed by the controller 1421 and various types of control data (such as a terminal list, transmission power data, and scheduling data).

The network interface 1423 is a communication interface for connecting the base station device 1420 to the core network 1424. The controller 1421 may communicate with a core network node or further gNB via the network interface 1423. In this case, the gNB 1400 and core network nodes or other gNBs can be connected to each other through logical interfaces (such as S1 interface and X2 interface). The network interface 1423 may also be a wired communication interface or a wireless communication interface for wireless backhaul. If the network interface 1423 is a wireless communication interface, the network interface 1923 may use a higher frequency band for wireless communication than the frequency band used by the wireless communication interface 1425.

The wireless communication interface 1425 supports any cellular communication scheme (such as Long-Term Evolution (LTE) and LTE-Advanced), and provides a wireless connection to a terminal located in a cell of the gNB 1400 via the antenna 1410. The wireless communication interface 1425 may generally include, for example, a baseband (BB) processor 1426 and an RF circuit 1427. The BB processor 1426 may perform, for example, encoding/decoding, modulation/demodulation, and multiplexing/demultiplexing, and performs various types of signal processing in layers (for example, L1, Medium Access Control (MAC), Radio Link Control (RLC), and Packet Data Convergence Protocol (PDCP)). In place of the controller 1421, the BB processor 1426 may have part or all of the logic functions described above. The BB processor 1426 may be a memory storing a communication control program, or a module including a processor and related circuits configured to execute the program. Updating the program may cause the functionality of the BB processor 1426 to change. The module may be a card or a blade inserted into a slot of the base station device 1420. Alternatively, the module can also be a chip mounted on a card or blade. Meanwhile, the RF circuit 1427 may include, for example, a mixer, a filter, and an amplifier, and transmit and receive wireless signals via the antenna 1410. Although FIG. 16 illustrates an example in which one RF circuit 1427 is connected to one antenna 1410, the present disclosure is not limited to this, instead, one RF circuit 1427 may be connected to multiple antennas 1410 at the same time.

As shown in FIG. 16, the wireless communication interface 1425 may include multiple BB processors 1426. For example, the multiple BB processors 1426 may be compatible with multiple frequency bands used by the gNB 1400. As shown in FIG. 16, the wireless communication interface 1425 may include multiple RF circuits 1427. For example, the multiple RF circuits 1427 may be compatible with multiple antenna elements. Although FIG. 16 illustrates an example in which the wireless communication interface 1425 includes multiple BB processors 1426 and multiple RF circuits 1427, the wireless communication interface 1425 may also include a single BB processor 1426 or a single RF circuit 1427.

Second Example

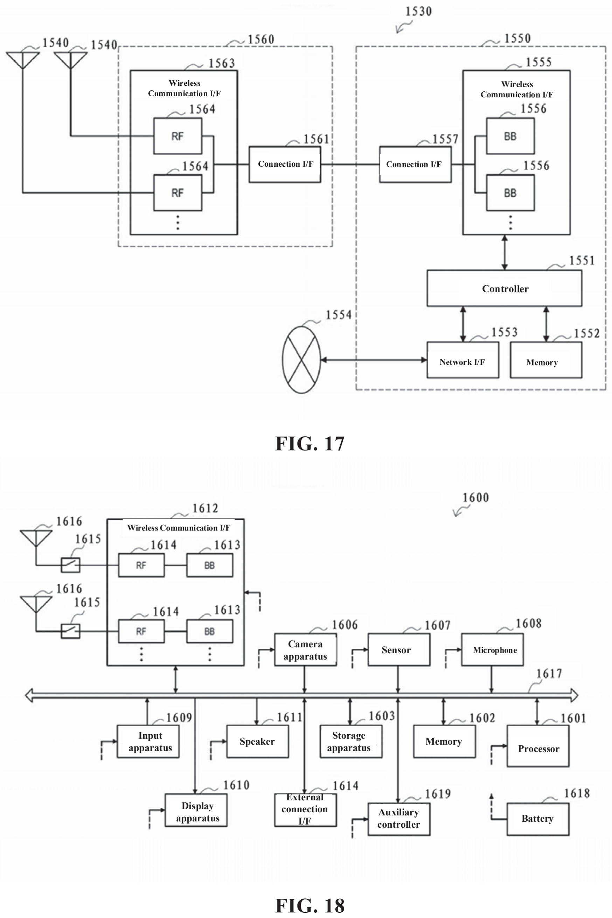

FIG. 17 is a block diagram showing a second example of a schematic configuration of a gNB to which the technology of the present disclosure can be applied. The gNB 1530 includes multiple antennas 1540, a base station device 1550 and a RRH 1560. The RRH 1560 and each antenna 1540 may be connected to each other via RF cables. The base station device 1550 and the RRH 1560 can be connected to each other via a high-speed line such as an optical fiber cable. In one implementation, the gNB 1530 (or the base station device 1550) here may correspond to the above electronic device 50 and/or 100.

Each of the antennas 1540 includes a single or multiple antenna elements (such as multiple antenna elements included in a MIMO antenna), and is used by the RRH 1560 to transmit and receive wireless signals. As shown in FIG. 17, the gNB 1530 may include multiple antennas 1540. For example, the multiple antennas 1540 may be compatible with multiple frequency bands used by the gNB 1530.

The base station device 1550 includes a controller 1551, a memory 1552, a network interface 1553, a wireless communication interface 1555 and a connection interface 1557. The controller 1551, the memory 1552, and the network interface 1553 are the same as the controller 1421, the memory 1422, and the network interface 1423 described with reference to FIG. 16.

The wireless communication interface 1555 supports any cellular communication scheme (such as LTE and LTE-Advanced), and provides wireless communication to terminals located in a sector corresponding to the RRH 1560 via the RRH 1560 and the antenna 1540. The wireless communication interface 1555 may generally include, for example, a BB processor 1556. The BB processor 1556 is the same as the BB processor 1426 described with reference to FIG. 14, except that the BB processor 1556 is connected to the RF circuit 1564 of the RRH 1560 via the connection interface 1557. As shown in FIG. 17, the wireless communication interface 1555 may include multiple BB processors 1556. For example, the multiple BB processors 1556 may be compatible with multiple frequency bands used by the gNB 1530. Although FIG. 17 illustrates an example in which the wireless communication interface 1555 includes multiple BB processors 1556, the wireless communication interface 1555 may also include a single BB processor 1556.

The connection interface 1557 is an interface for connecting the base station device 1550 (the wireless communication interface 1555) to the RRH 1560. The connection interface 1557 may also be a communication module for communication in the above high-speed line connecting the base station device 1550 (the wireless communication interface 1555) to the RRH 1560.

The RRH 1560 includes a connection interface 1561 and a wireless communication interface 1563.

The connection interface 1561 is an interface for connecting the RRH 1560 (the wireless communication interface 1563) to the base station device 1550. The connection interface 1561 may also be a communication module for communication in the above high-speed line.

The wireless communication interface 1563 transmits and receives wireless signals via the antenna 1540. The wireless communication interface 1563 may generally include an RF circuit 1564, for example. The RF circuit 1564 may include, for example, a mixer, a filter, and an amplifier, and transmits and receives wireless signals via the antenna 1540. Although FIG. 15 illustrates an example in which one RF circuit 1564 is connected to one antenna 1540, the present disclosure is not limited to this, instead, one RF circuit 1564 may be connected to multiple antennas 1540 at the same time.

As shown in FIG. 17, the wireless communication interface 1563 may include multiple RF circuits 1564. For example, the multiple RF circuits 1564 may support multiple antenna elements. Although FIG. 17 illustrates an example in which the wireless communication interface 1563 includes multiple RF circuits 1564, the wireless communication interface 1563 may also include a single RF circuit 2064.

[Example about User Device]

First Example

FIG. 18 is a block diagram showing an example of a schematic configuration of a smart phone 1600 to which the technology of the present disclosure can be applied. The smart phone 1600 includes a processor 1601, a memory 1602, a storage apparatus 1603, an external connection interface 1604, a camera apparatus 1606, a sensor 1607, a microphone 1608, an input apparatus 1609, a display apparatus 1610, a speaker 1611, a wireless communication interface 1612, one or more antenna switches 1615, one or more antennas 1616, a bus 1617, a battery 1618, and an auxiliary controller 1619. In one implementation, the smart phone 1600 (or the processor 1601) here may correspond to the above electronic device 50 and/or electronic device 100.

The processor 1601 may be, for example, a CPU or a system on chip (SoC), and controls functions of an application layer and further layers of the smart phone 1600. The memory 1602 includes RAM and ROM, and stores data and programs executed by the processor 1601. The storage apparatus 1603 may include a storage medium such as a semiconductor memory and a hard disk. The external connection interface 1604 is an interface for connecting an external apparatus (such as a memory card and a universal serial bus (USB) apparatus) to the smart phone 1600.

The camera apparatus 1606 includes an image sensor (such as a charge coupled device (CCD) and a complementary metal oxide semiconductor (CMOS)), and generates captured images. The sensor 1607 may include a set of sensors, such as a measurement sensor, a gyro sensor, a geomagnetic sensor, and an acceleration sensor. The microphone 1608 converts sound input to the smart phone 1600 into an audio signal. The input apparatus 1609 includes, for example, a touch sensor configured to detect a touch on the screen of the display apparatus 1610, a keypad, a keyboard, a button, or a switch, and receives operations or information input from a user. The display apparatus 1610 includes a screen (such as a liquid crystal display (LCD) and an organic light emitting diode (OLED) display), and displays an output image of the smart phone 1600. The speaker 1611 converts an audio signal output from the smart phone 1600 into sound.

The wireless communication interface 1612 supports any cellular communication scheme (such as LTE and LTE-Advanced), and performs wireless communication. The wireless communication interface 1612 may generally include, for example, a BB processor 1613 and an RF circuit 1619. The BB processor 1613 can perform, for example, encoding/decoding, modulation/demodulation, and multiplexing/demultiplexing, and perform various types of signal processing for wireless communication. Meanwhile, the RF circuit 1614 may include, for example, a mixer, a filter, and an amplifier, and transmit and receive wireless signals via the antenna 1616. The wireless communication interface 1612 may be a chip module on which a BB processor 1613 and an RF circuit 1614 are integrated. As shown in FIG. 18, the wireless communication interface 1612 may include multiple BB processors 1613 and multiple RF circuits 1614. Although FIG. 18 illustrates an example in which the wireless communication interface 1612 includes multiple BB processors 1613 and multiple RF circuits 1614, the wireless communication interface 1612 may include a single BB processor 1613 or a single RF circuit 1614.

Furthermore, the wireless communication interface 1612 may support another type of wireless communication scheme, such as a short-range wireless communication scheme, a near field communication scheme, and a wireless local area network (LAN) scheme, in addition to the cellular communication schemes. In this case, the wireless communication interface 1612 may include a BB processor 1613 and an RF circuit 1614 for each wireless communication scheme.

Each of the antenna switches 1615 switches the connection destination of the antenna 1616 among a plurality of circuits (e.g., circuits for different wireless communication schemes) included in the wireless communication interface 1612.

Each of the antennas 1616 includes a single or multiple antenna elements (such as multiple antenna elements included in a MIMO antenna), and is used for the wireless communication interface 1612 to transmit and receive wireless signals. As shown in FIG. 18, the smart phone 1600 may include multiple antennas 1616. Although FIG. 18 shows an example in which the smart phone 1600 includes multiple antennas 1616, the smart phone 1600 may also include a single antenna 1616.

In addition, the smart phone 1600 may include an antenna 1616 for each wireless communication scheme. In this case, the antenna switch 1615 may be omitted from the configuration of the smart phone 1600.

The bus 1617 connects the processor 1601, the memory 1602, the storage apparatus 1603, the external connection interface 1604, the camera apparatus 1606, the sensor 1607, the microphone 1608, the input apparatus 1609, the display apparatus 1610, the speaker 1611, the wireless communication interface 1612, and the auxiliary controller 1619 to each other. The battery 1618 provides power to the various blocks of the smart phone 1600 shown in FIG. 18 via feed lines, which are partially shown as dashed lines in the figure. The auxiliary controller 1619 operates minimum necessary functions of the smart phone 1600, for example, in a sleep mode.

Second Example

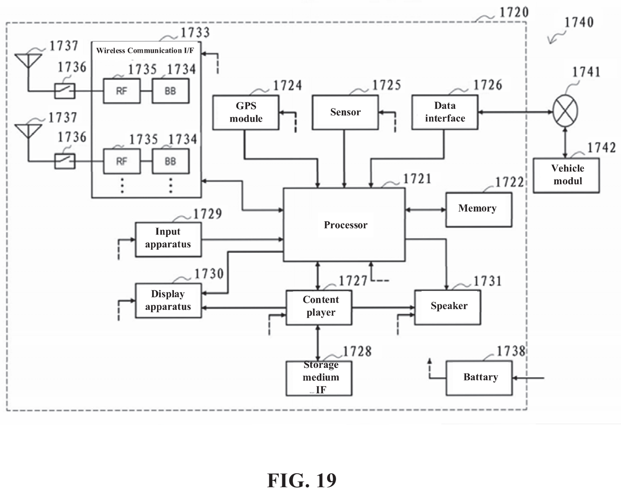

FIG. 19 is a block diagram showing an example of a schematic configuration of a car navigation device 1720 to which the technology of the present disclosure can be applied. The car navigation device 1720 includes a processor 1721, a memory 1722, a global positioning system (GPS) module 1724, a sensor 1725, a data interface 1726, a content player 1727, a storage medium interface 1728, an input apparatus 1729, a display apparatus 1730, a speaker 1731, a wireless communication interface 1733, one or more antenna switches 1736, one or more antennas 1737, and a battery 1738. In one implementation, the car navigation device 1720 (or the processor 1721) here may correspond to the above electronic device 50 and/or electronic device 100.

The processor 1721 may be, for example, a CPU or a SoC, and controls a navigation function and other functions of the car navigation device 1720. The memory 1722 includes RAM and ROM, and stores data and programs executed by the processor 1721.

The GPS module 1724 measures the location (such as latitude, longitude, and altitude) of the car navigation device 1720 using GPS signals received from GPS satellites. The sensor 1725 may include a set of sensors such as a gyro sensor, a geomagnetic sensor, and an air pressure sensor. The data interface 1726 is connected to, for example, an in-vehicle network 1741 via a terminal not shown, and acquires data (such as vehicle speed data) generated by the vehicle.

The content player 1727 reproduces content stored in storage medium (such as a CD and a DVD), which is inserted into the storage medium interface 1728. The input apparatus 1729 includes, for example, a touch sensor configured to detect a touch on the screen of the display apparatus 1730, a button, or a switch, and receives operations or information input from a user. The display apparatus 1730 includes a screen such as an LCD or OLED display, and displays an image of a navigation function or reproduced content. The speaker 1731 outputs sound of the navigation function or reproduced content.

The wireless communication interface 1733 supports any cellular communication scheme (such as LTE and LTE-Advanced), and performs wireless communication. The wireless communication interface 1733 may generally include, for example, a BB processor 1734 and an RF circuit 1735. The BB processor 1734 may perform, for example, encoding/decoding, modulation/demodulation, and multiplexing/demultiplexing, and perform various types of signal processing for wireless communication. Meanwhile, the RF circuit 1735 may include, for example, a mixer, a filter, and an amplifier, and transmit and receive wireless signals via the antenna 1737. The wireless communication interface 1733 can also be a chip module on which the BB processor 1734 and the RF circuit 1735 are integrated. As shown in FIG. 19, the wireless communication interface 1733 may include multiple BB processors 1734 and multiple RF circuits 1735. Although FIG. 19 illustrates an example in which the wireless communication interface 1733 includes multiple BB processors 1734 and multiple RF circuits 1735, the wireless communication interface 1733 may also include a single BB processor 1734 or a single RF circuit 1735.

Furthermore, the wireless communication interface 1733 may support other types of wireless communication scheme, such as a short-range wireless communication scheme, a near field communication scheme, and a wireless LAN scheme, in addition to the cellular communication schemes. In this case, the wireless communication interface 1733 may include the BB processor 1734 and the RF circuit 1735 for each wireless communication scheme.

Each of the antenna switches 1736 switches the connection destination of the antenna 1737 among a plurality of circuits (such as circuits for different wireless communication schemes) included in the wireless communication interface 1733.

Each of the antennas 1737 includes a single or multiple antenna elements (such as multiple antenna elements included in a MIMO antenna), and is used for the wireless communication interface 1733 to transmit and receive wireless signals. As shown in FIG. 19, the car navigation device 1720 may include multiple antennas 1737. Although FIG. 19 illustrates an example in which the car navigation device 1720 includes multiple antennas 1737, the car navigation device 1720 may also include a single antenna 1737.

Furthermore, the car navigation device 1720 may include an antenna 1737 for each wireless communication scheme. In this case, the antenna switch 1736 can be omitted from the configuration of the car navigation device 1720.

The battery 1738 provides power to various blocks of the car navigation device 1720 shown in FIG. 19 via feeder lines, which are partially shown as dashed lines in the figure. The battery 1738 accumulates electric power supplied from the vehicle.

The technology of the present disclosure may also be implemented as an in-vehicle system (or vehicle) 1740 including one or more blocks of the car navigation device 1720, the in-vehicle network 1741, and the vehicle module 1742. The vehicle module 1742 generates vehicle data (such as vehicle speed, engine speed, and fault information), and outputs the generated data to the in-vehicle network 1741.

The exemplary embodiments of the present disclosure have been described above with reference to the accompanying drawings, but the present disclosure is of course not limited to the above examples. Those skilled in the art may find various alterations and modifications within the scope of the appended claims, and it should be understood that these alterations and modifications will naturally fall within the technical scope of the present disclosure.

It should be understood that machine-executable instructions in a machine-readable storage medium or program product according to embodiments of the present disclosure can be configured to perform operations corresponding to the device and method embodiments described above. When referring to the above device and method embodiments, the embodiments of the machine-readable storage medium or program product will be apparent to those skilled in the art, and therefore description thereof will not be repeated. Machine-readable storage media and program products for carrying or including the above machine-executable instructions also fall within the scope of the present disclosure. Such storage media may include, but are not limited to, a floppy disk, an optical disk, a magneto-optical disk, a memory card, a memory stick, and the like.

In addition, it should be understood that the series of processes and devices described above may also be implemented by software and/or firmware. In the case of be implemented by software and/or firmware, corresponding programs constituting corresponding software are stored in a storage medium of a relevant device (for example, the memory 104 or 204 of the electronic device 10 shown in FIG. 10, the electronic device 20 shown in FIG. 12), which, when executed, can perform various functions.

For example, a plurality of functions included in one unit in the above embodiments may be implemented by separate apparatus. Alternatively, the plurality of functions implemented by multiple units in the above embodiments may be implemented by separate apparatus, respectively. Additionally, one of the above functions may be implemented by multiple units. Needless to say, such a configuration is included in the technical scope of the present disclosure.

In this specification, the steps described in the flowchart include not only processes performed in time sequence in the stated order, but also processes performed in parallel or individually rather than necessarily in time sequence. Furthermore, even in the steps processed in time sequence, needless to say, the order can be appropriately changed.

Although the present disclosure and its advantages have been described in detail, it should be understood that various changes, substitutions and alterations can be made herein without departing from the spirit and scope of the disclosure as defined by the appended claims. Furthermore, the terms "comprise", "include" or any other variation thereof in embodiments of the present disclosure are intended to encompass a non-exclusive inclusion, such that a process, method, article or device comprising a series of elements includes not only those elements, but also includes other elements not expressly listed, or includes elements inherent to such a process, method, article or device. Without further limitation, an element defined by the phrase "comprising one ...... " does not preclude the presence of additional identical elements in a process, method, article or device that includes the element.

In addition, the present disclosure may also have the following configurations:

(1) A control device for a wireless communication system, comprising a processing circuitry configured to:
receive a plurality of models associated with a plurality of terminal devices in the wireless communication system, wherein, the plurality of models comprise at least one aggregated model, wherein, each of the at least one aggregated model is generated by a corresponding terminal device aggregating its local model with respective one or more local models from one or more other terminal devices, and each local model is obtained by a corresponding terminal device performing training based on local data of the terminal device.

(2) The control device of (1), wherein, the processing circuitry is further configured to:
further receive, together with each of the at least one aggregated model, identification information identifying terminal devices corresponding to the local models aggregated by the aggregated model.

(3) The control device of (1), wherein, the processing circuitry is further configured to:
receive local model sidelink transmission result information indicating transmission success or failure of a local model from each of part or all terminal devices of the plurality of terminal devices to one or more other terminal devices.

(4) The control device of (3), wherein, the processing circuitry is further configured to:
transmit an aggregation instruction at least in response to the local model sidelink transmission result information, the aggregation instruction indicating whether a terminal device shall aggregate the local model of the terminal device with one or more local models of one or more other terminal devices, and when the aggregation is necessary, one or more local models of which one or more other terminal devices shall be aggregated with the local model of the terminal device.

(5) The control device of (2) or (3), wherein, the processing circuitry is further configured to:
aggregate the received one or more local models and/or one or more aggregated models such that a local model of a same terminal device is not aggregated repeatedly.

(6) The electronic device of any one of (1)-(4), wherein, the plurality of models further comprise one or more local models, wherein at least one local model of the one or more local models is the same as at least one of the local models aggregated by the at least one aggregated model.

(7) The control device of any one of (1)-(4), wherein, the processing circuitry is further configured to:
obtain one or more of the following information related to each of the plurality of terminal devices:

- information related to sidelink status of the terminal device, wherein, the information at least indicates which one or more terminal devices in the wireless communication system have a sidelink with the terminal device, and communication quality of the sidelink;
- position information of the terminal device;
- information indicating communication quality of an uplink and a downlink of the terminal device;
- information indicating computation capability of the terminal device; and
- information indicating an amount of user data of the terminal device for generation of a local model.

(8) The control device of (7), wherein, the processing circuitry is further configured to:
based on the obtained information, select, the plurality of terminal devices to participate in Federated learning, and/or divide at least a portion of terminal devices of the plurality of terminal devices to participate in Federated learning into one or more terminal device groups for Federated learning, wherein, each terminal device group comprises at least two terminal devices communicating via a sidelink.

(9) The control device of (8), wherein, the one or more terminal device groups comprise:

- one or more terminal device groups of a first type, each terminal device group of the first type comprises a central terminal device and at least one non-central terminal device, the at least one non-central terminal device communicates with the central terminal device via a sidelink; and/or
- one or more terminal device groups of a second type, each terminal device group of the second type comprises at least two terminal devices communicating with each other via a sidelink,

wherein, in the terminal device group of the first type, the central terminal device aggregates the local model corresponding to the central terminal device and the local model corresponding to the at least one non-central terminal device in the terminal device group of the first type received via the sidelink, and wherein, in the terminal device group of the second type, each terminal device aggregates the local model corresponding to the terminal device and the local models corresponding to the other terminal devices in the terminal device group of the second type received via the sidelink.

(10) The control device of (8), wherein, the processing circuitry is further configured to:
transmit information related to the division of the one or more terminal device groups.

(11) The control device of any one of (1)-(4), wherein, the control device is a base station or an electronic device for implementing an application function (AF).

(12) A first terminal device for a wireless communication system, comprising a processing circuitry configured to:

upload a first local model obtained by performing training based on local data to a control device of the wireless communication system; and
transmit the first local model to a second terminal device of the wireless communication system via sidelink communication, for the second terminal device to generate an aggregated model.

(13) The first terminal device of (12), wherein, the processing circuitry is further configured to:
upload, to the control device, information indicating transmission success or failure of the first local model to the second terminal device.

(14) A second terminal device for a wireless communication system, comprising a processing circuitry configured to:

receive at least one first local model from at least one first terminal device of the wireless communication system via sidelink communication, each of the at least one first local model being obtained by one of the at least one first terminal device performing training based on its local data; and
aggregate a second local model obtained by performing training based on local data with the at least one first local model to generate an aggregated model, and upload the aggregated model to a control device of the wireless communication system.

(15) The second terminal device of (14), wherein, the processing circuitry is further configured to:
further upload, together with the aggregated model, information identifying respective terminal devices corresponding to the aggregated local model.

(16) The second terminal device of (14), wherein, the processing circuitry is further configured to:

- receive an aggregation instruction, wherein, the aggregation instruction indicates whether the second terminal device shall aggregate the second local model with one or more first local models, and when the aggregation is necessary, with which one or more first local models the second local model shall be aggregated; and
- generate an aggregated model in response to the aggregation instruction.

(17) A third terminal device for a wireless communication system, the third terminal device and one or more other terminal devices constituting a terminal device group, the third terminal device comprising a processing circuit configured to:

receive at least one local model from at least one other terminal device in the terminal device group via sidelink communication, each of the at least one local model being obtained by one of the at least one other terminal device performing training based on its local data;
aggregate a third local model obtained by performing training based on local data with at least one of the received at least one local model to generate an aggregated model, and upload the aggregated model to the control device; and
transmit, to each of the other terminal devices in the terminal device group via sidelink communication, the third local model, for each of the other terminal devices to generate an aggregated model.

(18) The third terminal device of (17), wherein, the processing circuitry is further configured to:
further transmit, together with the aggregated model, information identifying respective terminal devices corresponding to the aggregated local model.

(19) The third terminal device of (18), wherein, the processing circuitry is further configured to:

transmit, via sidelink communication, to each of the other terminal devices of the terminal device group, information indicating transmission success or failure of the third local model to each of the other terminal devices of the terminal device group; and

receive, via sidelink communication, from at least one other terminal device of the terminal device group, information indicating transmission success or failure of a local model from said other terminal device to respective terminal devices of the terminal device group.

(20) The third terminal device of (19), wherein, the processing circuitry is further configured to:
in a case where there does not exist a sidelink transmission failure of a local model related to the third terminal device: aggregate the third local model obtained by performing training based on local data with the following one or more received local models to generate an aggregated model: the one or more local models corresponding to one or more other terminal devices that no sidelink transmission failure of a local model related thereto exists.

(21) The third terminal device of (19), wherein, the processing circuitry is further configured to:
in a case where there exists a sidelink transmission failure of a local model related to the third terminal device:

upload the third local model to the control device separately, or aggregate the third local model with the following one or more received local models to generate a new aggregated model and upload the new aggregated model to the control device: the one or more local models corresponding to one or more other terminal devices that sidelink transmission failure of a local model related thereto exists, or

transmit the third local model to the following other terminal devices in the terminal device group for them to generate and upload a new aggregated model to the control device: the other terminal devices that sidelink transmission failure of local models related thereto exists.

(22) The third terminal device of (17), wherein, the processing circuitry is further configured to:
transmit, to the control device, information indicating transmission success or failure of the third local model to respective other terminal devices in the terminal device group.

(23) The third terminal device of (22), wherein, the processing circuitry is further configured to:

- receive an aggregation instruction, wherein, the aggregation instruction indicates whether the third terminal device shall aggregate the third local model with one or more local models, and when the aggregation is necessary, with which one or more local models the third local model shall be aggregated; and
- generate an aggregated model in response to the aggregation instruction.

(24) The terminal device of any one of (12), (14), and (17), wherein, the processing circuitry is further configured to:
upload one or more of the following information to the control device for selecting terminal devices to participate in Federated learning and/or dividing terminal device groups, wherein, a terminal device group comprises at least two terminal devices communicating via a sidelink:

- information related to sidelink status of the terminal device, wherein, the information at least indicates which one or more terminal devices in the wireless communication system have a sidelink with the terminal device, and communication quality of the sidelink;
- position information of the terminal device;
- information indicating communication quality of an uplink and a downlink of the terminal device;
- information indicating computation capability of the terminal device; and
- information indicating an amount of user data of the terminal device for generation of a local model.

(25) The terminal device of any one of (12), (14), and (17), wherein, the processing circuitry is further configured to:
receive information related to the division of the one or more terminal device groups.

(26) A method for a control device side of a wireless communication system, comprising:
receiving a plurality of models associated with a plurality of terminal devices in the wireless communication system, wherein, the plurality of models comprise at least one aggregated model, wherein, each of the at least one aggregated model is generated by a corresponding terminal device aggregating its local model with respective one or more local models from one or more other terminal devices, and each local model is obtained by a corresponding terminal device performing training based on local data of the terminal device.

(27) A method for a first terminal device of a wireless communication system, comprising:

uploading a first local model obtained by performing training based on local data to a control device of the wireless communication system;

transmitting the first local model to a second terminal device of the wireless communication system via sidelink communication, for the second terminal device to generate an aggregated model.

(28) A method for a second terminal device of a wireless communication system, comprising:

receiving at least one first local model from at least one first terminal device of the wireless communication system via sidelink communication, each of the at least one first local model being obtained by one of the at least one first terminal device performing training based on its local data; and

aggregating a second local model obtained by performing training based on local data with the at least one first local model to generate an aggregated model, and uploading the aggregated model to a control device of the wireless communication system.

(29) A method for a third terminal device of a wireless communication system, the third terminal device and one or more other terminal devices constituting a terminal device group, the method comprising:

receiving at least one local model from at least one other terminal device in the terminal device group via sidelink communication, each of the at least one local model being obtained by one of the at least one other terminal device performing training based on its local data;

aggregating a third local model obtained by performing training based on local data with at least one of the received at least one local model to generate an aggregated model, and uploading the aggregated model to the control device; and

transmitting, to each of the other terminal devices in the terminal device group via sidelink communication, the third local model, for each of the other terminal devices to generate an aggregated model.

(30) A non-transitory computer-readable storage medium having executable instructions stored thereon, which, when executed, implement the method of any one of (26)-(29).

(31) A computer program product comprising executable instructions which, when executed, implement the method of any one of (26)-(29).

(32) A device comprising:

a processor,

a storage having executable instructions stored thereon, which, when executed, implement the method of any one of (26)-(29).

## Claims

1. A control device for a wireless communication system, comprising a processing circuitry configured to:

receive a plurality of models associated with a plurality of terminal devices in the wireless communication system, wherein, the plurality of models comprise at least one aggregated model,

wherein, each of the at least one aggregated model is generated by a corresponding terminal device aggregating its local model with respective one or more local models from one or more other terminal devices, and each local model is obtained by a corresponding terminal device performing training based on local data of the terminal device.

2. The control device of claim 1, wherein, the processing circuitry is further configured to:

further receive, together with each of the at least one aggregated model, identification information identifying terminal devices corresponding to the local models aggregated by the aggregated model.

3. The control device of claim 1, wherein, the processing circuitry is further configured to:

receive local model sidelink transmission result information indicating transmission success or failure of a local model from each of part or all terminal devices of the plurality of terminal devices to one or more other terminal devices.

4. The control device of claim 3, wherein, the processing circuitry is further configured to:

transmit an aggregation instruction at least in response to the local model sidelink transmission result information, the aggregation instruction indicating whether a terminal device shall aggregate the local model of the terminal device with one or more local models of one or more other terminal devices, and when the aggregation is necessary, one or more local models of which one or more other terminal devices shall be aggregated with the local model of the terminal device.

5. The control device of claim 2 or 3, wherein, the processing circuitry is further configured to:
aggregate the received one or more local models and/or one or more aggregated models such that a local model of a same terminal device is not aggregated repeatedly.

6. The electronic device of any one of claims 1-4, wherein, the plurality of models further comprise one or more local models, wherein at least one local model of the one or more local models is the same as at least one of the local models aggregated by the at least one aggregated model.

7. The control device of any one of claims 1-4, wherein, the processing circuitry is further configured to:
obtain one or more of the following information related to each of the plurality of terminal devices:

- information related to sidelink status of the terminal device, wherein, the information at least indicates which one or more terminal devices in the wireless communication system have a sidelink with the terminal device, and communication quality of the sidelink;
- position information of the terminal device;
- information indicating communication quality of an uplink and a downlink of the terminal device;
- information indicating computation capability of the terminal device; and
- information indicating an amount of user data of the terminal device for generation of a local model.

8. The control device of claim 7, wherein, the processing circuitry is further configured to:
based on the obtained information, select, from the plurality of terminal devices, one or more terminal devices to participate in Federated learning, and/or divide at least a portion of terminal devices of one or more terminal devices to participate in Federated learning into one or more terminal device groups for Federated learning, wherein, each terminal device group comprises at least two terminal devices communicating via a sidelink.

9. The control device of claim 8, wherein, the one or more terminal devices comprise:

- one or more terminal device groups of a first type, each terminal device group of the first type comprises a central terminal device and at least one non-central terminal device, the at least one non-central terminal device communicates with the central terminal device via a sidelink; and/or
- one or more terminal device groups of a second type, each terminal device group of the second type comprises at least two terminal devices communicating with each other via a sidelink,

wherein, in the terminal device group of the first type, the central terminal device aggregates the local model corresponding to the central terminal device and the local model corresponding to the at least one non-central terminal device in the terminal device group of the first type received via the sidelink, and wherein, in the terminal device group of the second type, each terminal device aggregates the local model corresponding to the terminal device and the local models corresponding to the other terminal devices in the terminal device group of the second type received via the sidelink.

10. The control device of claim 8, wherein, the processing circuitry is further configured to:
transmit information related to the division of the one or more terminal device groups.

11. The control device of any one of claims 1-4, wherein, the control device is a base station or an electronic device for implementing an application function (AF).

12. A first terminal device for a wireless communication system, comprising a processing circuitry configured to:

upload a first local model obtained by performing training based on local data to a control device of the wireless communication system; and
transmit the first local model to a second terminal device of the wireless communication system via sidelink communication, for the second terminal device to generate an aggregated model.

13. The first terminal device of claim 12, wherein, the processing circuitry is further configured to:
upload, to the control device, information indicating transmission success or failure of the first local model to the second terminal device.

14. A second terminal device for a wireless communication system, comprising a processing circuitry configured to:

receive at least one first local model from at least one first terminal device of the wireless communication system via sidelink communication, each of the at least one first local model being obtained by one of the at least one first terminal device performing training based on its local data; and
aggregate a second local model obtained by performing training based on local data with the at least one first local model to generate an aggregated model, and upload the aggregated model to a control device of the wireless communication system.

15. The second terminal device of claim 14, wherein, the processing circuitry is further configured to:
further upload, together with the aggregated model, information identifying respective terminal devices corresponding to the aggregated local model.

16. The second terminal device of claim 14, wherein, the processing circuitry is further configured to:

- receive an aggregation instruction, wherein, the aggregation instruction indicates whether the second terminal device shall aggregate the second local model with one or more first local models, and when the aggregation is necessary, with which one or more first local models the second local model shall be aggregated; and
- generate an aggregated model in response to the aggregation instruction.

17. A third terminal device for a wireless communication system, the third terminal device and one or more other terminal devices constituting a terminal device group, the third terminal device comprising a processing circuit configured to:

receive at least one local model from at least one other terminal device in the terminal device group via sidelink communication, each of the at least one local model being obtained by one of the at least one other terminal device performing training based on its local data;
aggregate a third local model obtained by performing training based on local data with at least one of the received at least one local model to generate an aggregated model, and upload the aggregated model to the control device; and
transmit, to each of the other terminal devices in the terminal device group via sidelink communication, the third local model, for each of the other terminal devices to generate an aggregated model.

18. The third terminal device of claim 17, wherein, the processing circuitry is further configured to:
further transmit, together with the aggregated model, information identifying respective terminal devices corresponding to the aggregated local model.

19. The third terminal device of claim 18, wherein, the processing circuitry is further configured to:

transmit, via sidelink communication, to each of the other terminal devices of the terminal device group, information indicating transmission success or failure of the third local model to each of the other terminal devices of the terminal device group; and
receive, via sidelink communication, from at least one other terminal device of the terminal device group, information indicating transmission success or failure of a local model from said other terminal device to respective terminal devices of the terminal device group.

20. The third terminal device of claim 19, wherein, the processing circuitry is further configured to:
in a case where there does not exist a sidelink transmission failure of a local model related to the third terminal device:
aggregate the third local model obtained by performing training based on local data with the following one or more received local models to generate an aggregated model: the one or more local models corresponding to one or more other terminal devices that no sidelink transmission failure of a local model related thereto exists.

21. The third terminal device of claim 19, wherein, the processing circuitry is further configured to:
in a case where there exists a sidelink transmission failure of a local model related to the third terminal device:

upload the third local model to the control device separately, or

aggregate the third local model with the following one or more received local models to generate a new aggregated model and upload the new aggregated model to the control device: the one or more local models corresponding to one or more other terminal devices that sidelink transmission failure of a local model related thereto exists, or

transmit the third local model to the following other terminal devices in the terminal device group for them to generate and upload a new aggregated model to the control device: the other terminal devices that sidelink transmission failure of local models related thereto exists.

22. The third terminal device of claim 17, wherein, the processing circuitry is further configured to:
transmit, to the control device, information indicating transmission success or failure of the third local model to respective other terminal devices in the terminal device group.

23. The third terminal device of claim 22, wherein, the processing circuitry is further configured to:

- receive an aggregation instruction, wherein, the aggregation instruction indicates whether the third terminal device shall aggregate the third local model with one or more local models, and when the aggregation is necessary, with which one or more local models the third local model shall be aggregated; and
- generate an aggregated model in response to the aggregation instruction.

24. The terminal device of any one of claims 12, 14, and 17, wherein, the processing circuitry is further configured to:
upload one or more of the following information to the control device for selecting terminal devices to participate in Federated learning and/or dividing terminal device groups, wherein, a terminal device group comprises at least two terminal devices communicating via a sidelink:

- information related to sidelink status of the terminal device, wherein, the information at least indicates which one or more terminal devices in the wireless communication system have a sidelink with the terminal device, and communication quality of the sidelink;
- position information of the terminal device;
- information indicating communication quality of an uplink and a downlink of the terminal device;
- information indicating computation capability of the terminal device; and
- information indicating an amount of user data of the terminal device for generation of a local model.

25. The terminal device of any one of claims 12, 14, and 17, wherein, the processing circuitry is further configured to:
receive information related to the division of the one or more terminal device groups.

26. A method for a control device side of a wireless communication system, comprising:

receiving a plurality of models associated with a plurality of terminal devices in the wireless communication system, wherein, the plurality of models comprise at least one aggregated model,
wherein, each of the at least one aggregated model is generated by a corresponding terminal device aggregating its local model with respective one or more local models from one or more other terminal devices, and each local model is obtained by a corresponding terminal device performing training based on local data of the terminal device.

27. A method for a first terminal device of a wireless communication system, comprising:

uploading a first local model obtained by performing training based on local data to a control device of the wireless communication system;
transmitting the first local model to a second terminal device of the wireless communication system via sidelink communication, for the second terminal device to generate an aggregated model.

28. A method for a second terminal device of a wireless communication system, comprising:

receiving at least one first local model from at least one first terminal device of the wireless communication system via sidelink communication, each of the at least one first local model being obtained by one of the at least one first terminal device performing training based on its local data; and
aggregating a second local model obtained by performing training based on local data with the at least one first local model to generate an aggregated model, and uploading the aggregated model to a control device of the wireless communication system.

29. A method for a third terminal device of a wireless communication system, the third terminal device and one or more other terminal devices constituting a terminal device group, the method comprising:

receiving at least one local model from at least one other terminal device in the terminal device group via sidelink communication, each of the at least one local model being obtained by one of the at least one other terminal device performing training based on its local data;

aggregating a third local model obtained by performing training based on local data with at least one of the received at least one local model to generate an aggregated model, and uploading the aggregated model to the control device; and

transmitting, to each of the other terminal devices in the terminal device group via sidelink communication, the third local model, for each of the other terminal devices to generate an aggregated model.

30. A non-transitory computer-readable storage medium having executable instructions stored thereon, which, when executed, implement the method of any one of claims 26-29.

31. A computer program product comprising executable instructions which, when executed, implement the method of any one of claims 26-29.

32. A device comprising:

a processor,

a storage having executable instructions stored thereon, which, when executed, implement the method of any one of claims 26-29.

**FIG. 1**

**FIG. 2**

**FIG. 3**

**FIG. 4A**

**FIG. 4B**

**FIG. 5A**

| UE#1 | UE#2 | ... | UE#M | Control Device |
|------|------|-----|------|----------------|

Perform training based on local data to obtain $w_1^t$

Perform training based on local data to obtain $w_2^t$

Perform training based on local data to obtain $w_M^t$

$w_1^t$

$w_1^t$

UE#1 → UE#M sidelink transmission has failed

$w_2^t$

$w_2^t$

UE#2 → UE#M sidelink transmission is successful

Aggregation instruction

Aggregate locally to obtain $w_M^{t+1/2}$

$w_M^{t+1/2}$

Aggregate globally to obtain $w^{t+1}$

**FIG. 5B**

$W_1^{t+1/2}$

$W_2^{t++1/2}$

$W_M^{t+1/2}$

UE#1

UE#M

UE#2

$W_{M+1}^t$

UE#M+1

$W_K^t$

UE#K

...

**FIG. 6**

FIG. 7A

**FIG. 7B**

**FIG. 7C**

**FIG. 8A**

**FIG. 8B**

## FIG. 8C

| UE#1 | UE#2 | ... | UE#M | | Control Device |

Perform training based on local data to obtain $w_1^t$

Perform training based on local data to obtain $w_2^t$

Perform training based on local data to obtain $w_M^t$

UE#1 broadcasts $w_1^t$, UE#2 broadcasts $w_2^t$ ··· UE#M broadcasts $w_M^t$ wherein sidelink transmission from UE#2 to UE#1 has failed

UE#1, UE#2 ··· UE#M inform the control device of sidelink transmission success or failure of a local model

Control device transmit aggregation instructions to UE#1, UE#2 ··· UE#M

Aggregate locally to obtain $w_2^{t+1/2}$

Aggregate locally to obtain $w_M^{t+1/2}$

$w_1^t$

$w_2^{t+1/2}$

$w_M^{t+1/2}$

Aggregate globally to obtain $w^{t+1}$

**FIG. 8C**

## FIG. 9

| UE#1 | UE#2 | ... | UE#M | | Control Device |

Information of UE#1

Information of UE#2

Information of UE#M

Select UEs to participate in Federated learning and divide UE groups

Instruction for participating in Federated learning and/or information related to the division of Federated learning groups

Instruction for participating in Federated learning and/or information related to the division of Federated learning groups

Instruction for participating in Federated learning and/or information related to the division of Federated learning groups

**FIG. 9**

Electronic device 10

Processing circuitry 102

Terminal device selection unit

Memory 104

Aggregation instruction generation unit

Communication unit 106

**Fig. 10**

**100**

S1002    Start

S1004    Receive a plurality of models

S1006    End

**FIG. 11**

Electronic device 20

Processing circuitry 202

Local model generation unit

Aggregation model generation unit

Memory 204

Communication unit 206

**FIG. 12**

200

S2002 — Start

S2004 — Upload a first local model to a control device

S2006 — Transmit the first local model to a second terminal device

S2008 — End

**FIG. 13A**

210

S2102 — Start

S2104 — Receive first local models from other terminal devices of a terminal device group

S2106 — Aggregate a second local model with the first local models to generate an aggregated model, and upload the aggregated model to a control device

S2108 — End

**FIG. 13B**

220

S2202 — Start

S2204 — Receive local models from other terminal devices of a terminal device group

S2206 — Aggregate at least one local model with a third local model to generate an aggregated model, and upload the aggregated model to a control devic

S2208 — Transmit the third local model to the other terminal devices of the terminal device group

S2210 — End

**FIG. 13C**

**FIG. 14**

**FIG. 15**

**FIG. 16**

**FIG. 17**

**FIG. 18**

**FIG. 19**

## INTERNATIONAL SEARCH REPORT

| | International application No. |
|---|---|
| | **PCT/CN2024/087946** |

### A. CLASSIFICATION OF SUBJECT MATTER

G06N20/20(2019.01)i; H04W24/02(2009.01)i

According to International Patent Classification (IPC) or to both national classification and IPC

### B. FIELDS SEARCHED

Minimum documentation searched (classification system followed by classification symbols)

IPC: G06N,H04W,H04L

Documentation searched other than minimum documentation to the extent that such documents are included in the fields searched

Electronic data base consulted during the international search (name of data base and, where practicable, search terms used)

CNTXT, DWPI, ENTXT, ENTXTC: 联邦学习, 本地, 聚合, 侧链路, 侧行链路, 旁链路, 副链路, 直连链路, 成功, 失败, 模型, 簇, 集群, 组, 划分, 分成, 防, 避免, 重复, 故障, 基站, 上传, 发送, 终端, 用户设备, 基站, AF, UE, fail+, success+, send+, aggregat+, upload+, local, model, transmit+

### C. DOCUMENTS CONSIDERED TO BE RELEVANT

| Category* | Citation of document, with indication, where appropriate, of the relevant passages | Relevant to claim No. |
|---|---|---|
| X | US 2022180251 A1 (QUALCOMM INC.) 09 June 2022 (2022-06-09) description, paragraphs [0081]-[0145], and figures 5-9 | 1-2, 6, 11-12, 14-15, 26-28, 30-32 |
| Y | US 2022180251 A1 (QUALCOMM INC.) 09 June 2022 (2022-06-09) description, paragraphs [0081]-[0145], and figures 5-9 | 3-5, 7-10, 13, 16-25, 29 |
| Y | WO 2022089507 A1 (SONY GROUP CORP.) 05 May 2022 (2022-05-05) description, paragraphs [0053]-[0063] | 3-5, 7-10, 13, 16-25, 29 |
| X | WO 2022233511 A2 (NOKIA TECHNOLOGIES OY) 10 November 2022 (2022-11-10) description, page 14, line 20-page 25, line 35 | 1, 12, 14, 26-28, 30-32 |
| A | WO 2023007461 A1 (TELEFONAKTIEBOLAGET LM ERICSSON (PUBL)) 02 February 2023 (2023-02-02) entire document | 1-32 |

☐ Further documents are listed in the continuation of Box C.　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 July 2024** | **19 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/087946**

| Patent document cited in search report | | | Publication date (day/month/year) | Patent family member(s) | | | Publication date (day/month/year) |
|---|---|---|---|---|---|---|---|
| US | 2022180251 | A1 | 09 June 2022 | WO | 2022120312 | A1 | 09 June 2022 |
| WO | 2022089507 | A1 | 05 May 2022 | EP | 4207008 | A1 | 05 July 2023 |
| | | | | US | 2023385688 | A1 | 30 November 2023 |
| | | | | JP | 2023548150 | A | 15 November 2023 |
| | | | | CN | 114418131 | A | 29 April 2022 |
| | | | | CN | 116490883 | A | 25 July 2023 |
| WO | 2022233511 | A2 | 10 November 2022 | US | 2024152768 | A1 | 09 May 2024 |
| | | | | EP | 4334859 | A2 | 13 March 2024 |
| WO | 2023007461 | A1 | 02 February 2023 | EP | 4377836 | A1 | 05 June 2024 |
| | | | | CN | 117730330 | A | 19 March 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202310436139X